(19) **Europäisches Patentamt / European Patent Office / Office européen des brevets**

(11) **EP 4 694 554 A1**

(12) **EUROPEAN PATENT APPLICATION**
published in accordance with Art. 153(4) EPC

(43) Date of publication:
**11.02.2026 Bulletin 2026/07**

(21) Application number: **24931822.1**

(22) Date of filing: **26.03.2024**

(51) International Patent Classification (IPC):
**H04W 76/15** (2018.01)

(52) Cooperative Patent Classification (CPC):
**H04W 76/15**

(86) International application number:
**PCT/CN2024/083895**

(87) International publication number:
**WO 2025/199761 (02.10.2025 Gazette 2025/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **WANG, Jiabei**
**Dongguan, Guangdong 523860 (CN)**

• **LU, Liuming**
**Dongguan, Guangdong 523860 (CN)**
• **LUO, Chaoming**
**Dongguan, Guangdong 523860 (CN)**
• **GAO, Ning**
**Dongguan, Guangdong 523860 (CN)**
• **LI, Yapu**
**Dongguan, Guangdong 523860 (CN)**
• **XU, Shunhao**
**Dongguan, Guangdong 523860 (CN)**
• **YAN, Li**
**Dongguan, Guangdong 523860 (CN)**

(74) Representative: **RGTH**
**Patentanwälte PartGmbB**
**Neuer Wall 10**
**20354 Hamburg (DE)**

(54) **WIRELESS COMMUNICATION METHOD AND COMMUNICATION DEVICE**

(57)    Provided are a wireless communication method and a communication device. The method comprises: on the basis of interference information, a first device sends a first frame to a second device, the first frame being used for indicating interference coordination operation information of one or more links and/or one or more subchannels/operating frequency bands. In the present application, the first device can send the first frame to the second device to indicate the interference coordination operation information of the one or more links and/or the one or more subchannels/operating frequency bands. On the basis of the interference coordination operation information, coordination of interference on the transmission link and/or the subchannel/operating frequency band is facilitated, thereby reducing the influence thereof on data transmission of a wireless communication system.

100

AP 111     AP 112

STA 121     STA 122

FIG. 1

Description

TECHNICAL FIELD

The present disclosure relates to the field of communication technologies, and in particular, to a method for wireless communication and a communication device.

BACKGROUND

In some cases, data transmission in a wireless communication system may be interfered with by other systems (e.g., a co-located-device system). Therefore, how to effectively coordinate interference to reduce impact on data transmission in the wireless communication system is a problem to be solved.

SUMMARY

The present disclosure provides a method for wireless communication and a communication device. Various aspects involved in the present disclosure are described as follows.

In a first aspect, a method for wireless communication is provided, and the method includes: transmitting, by a first device, a first frame to a second device based on interference information, where the first frame is used for indicating interference coordination operation information of one or more links and/or one or more sub-channels/operating frequency bands.

In a second aspect, a method for wireless communication is provided, and the method includes: receiving, by a second device, a first frame transmitted by a first device based on interference information, where the first frame is used for indicating interference coordination operation information of one or more links and/or one or more sub-channels/operating frequency bands.

In a third aspect, a communication device is provided, which is a first device and includes: a transmitting module, used to transmit a first frame to a second device based on interference information, where the first frame is used for indicating interference coordination operation information of one or more links and/or one or more sub-channels/operating frequency bands.

In a fourth aspect, a communication device is provided, which is a second device and includes: a receiving module, used to receive a first frame transmitted by a first device based on interference information, where the first frame is used for indicating interference coordination operation information of one or more links and/or one or more sub-channels/operating frequency bands.

In a fifth aspect, a communication device is provided, which includes a processor and a memory. The memory is used to store one or more computer programs, and the processor is used to call the computer program(s) in the memory, to enable the communication device to perform part or all of steps of the method in the first aspect.

In a sixth aspect, a communication device is provided, which includes a processor and a memory. The memory is used to store one or more computer programs, and the processor is configured to call the computer program(s) in the memory, to enable the communication device to perform part or all of steps of the method in the second aspect.

In a seventh aspect, the embodiments of the present disclosure provide a computer-readable storage medium. The computer-readable storage medium has stored thereon a computer program, and the computer program enables a communication device to perform part or all of steps of the methods in the above various aspects.

In an eighth aspect, the embodiments of the present disclosure provide a computer program product. The computer program product includes a non-transient computer-readable storage medium having stored a computer program, and the computer program is operable to enable a communication device to perform part or all of steps of the methods in the above various aspects. In some implementations, the computer program product may be a software installation package.

In a ninth aspect, the embodiments of the present disclosure provide a chip, which includes a memory and a processor. The processor may call a computer program from the memory and run the computer program to implement part or all of steps of the methods in the above various aspects.

In the present disclosure, a first device may transmit a first frame to a second device, to indicate interference coordination operation information of one or more links and/or one or more sub-channels/operating frequency bands. Based on the interference coordination operation information, it helps to coordinate interference on a transmission link and/or sub-channel/operating frequency band, thereby reducing impact on data transmission of a wireless communication system.

BRIEF DESCRIPTION OF THE DRAWINGS

FIG. 1 is a schematic diagram of a wireless communication system to which the embodiments of the present disclosure are applied.
FIG. 2 is a schematic diagram of periodically adjusting a number of spatial streams.
FIG. 3 is a schematic diagram of a signaling interaction workflow of P2P TWT.
FIG. 4 is a schematic flowchart of a method for wireless communication provided in the embodiments of the present disclosure.
FIG. 5 is a schematic structural diagram of a CDI-info frame provided in the embodiments of the present disclosure.

FIG. 6 is a schematic diagram showing meanings of a periodicity interference subfield provided in the embodiments of the present disclosure.

FIG. 7 is a schematic structural diagram of a trigger-CDI frame provided in the embodiments of the present disclosure.

FIGS. 8A to 8C are schematic structural diagrams of TWT elements provided in the embodiments of the present disclosure.

FIG. 9 is a schematic structural diagram of a link-indicator frame provided in the embodiments of the present disclosure.

FIG. 10 is a schematic structural diagram of a link information element subfield provided in the embodiments of the present disclosure.

FIG. 11 is a schematic structural diagram of an R-TWT request type field provided in the embodiments of the present disclosure.

FIG. 12 is a schematic flowchart of a method for wireless communication provided in Embodiment 1 of the present disclosure.

FIGS. 13A to 13D are schematic flowcharts of a method for wireless communication provided in Embodiment 2 of the present disclosure.

FIGS. 14A to 14B are schematic flowcharts of a method for wireless communication provided in Embodiment 3 of the present disclosure.

FIGS. 15A to 15C are schematic flowcharts of a method for wireless communication provided in Embodiment 4 of the present disclosure.

FIGS. 16A to 16C are schematic flowcharts of a reporting of interference information provided in the embodiments of the present disclosure.

FIG. 17 is a schematic structural diagram of a communication device provided in an embodiment of the present disclosure.

FIG. 18 is a schematic structural diagram of a communication device provided in another embodiment of the present disclosure.

FIG. 19 is a schematic structural diagram of a communication apparatus provided in the embodiments of the present disclosure.

## DETAILED DESCRIPTION

Technical solutions in the present disclosure will be described below with reference to the accompanying drawings.

Communication system

The technical solutions of the embodiments of the present disclosure may be applied to various communication systems, such as wireless local area network (WLAN), wireless fidelity (WiFi), high performance wireless local area network (HIPELAN), wide area network (WAN), a cellular network, or other communication systems. For another example, the technical solutions provided in the embodiments of the present disclosure may be applied to communication systems adopting the 802.11 standard. Exemplarily, the 802.11 standard includes, but is not limited to, the 802.11ax standard, the 802.11be standard, and a next generation 802.11 standard.

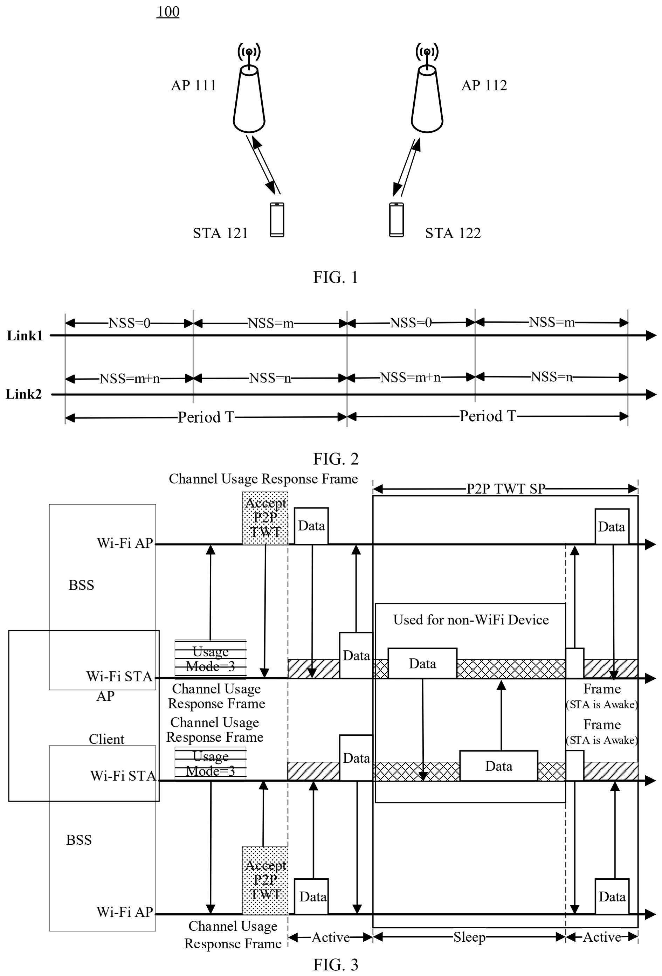

FIG. 1 shows a schematic diagram of a communication system to which the embodiments of the present disclosure are applied. As shown in FIG. 1, communication devices in the communication system 100 may include an access point (AP) 111 and an AP 112, and a station (STA) 121 and a STA 122, where the STA 121 may access network through the AP 111, and STA 122 may access network through AP 112.

In some implementations, a STA may establish an association relationship with one or more APs, and then the STA and the AP(s) having the association relationship may communicate with each other. As shown in FIG. 1, the AP 111 and the STA 121 may communicate with each other after establishing an association relationship therebetween, and the AP 112 and the STA 122 may communicate with each other after establishing an association relationship therebetween.

In some implementations, the communication in the communication system 100 may be communication between an AP and a non-AP STA, or may be communication between a non-AP STA and a non-AP STA, or may be communication between a STA and a peer STA. The peer STA may refer to a device that communicates with a STA peer-to-peer, for example, the peer STA may be an AP, or may be a non-AP STA.

It should be understood that FIG. 1 exemplarily shows two AP STAs and two non-AP STAs. The communication system 100 may include a larger number of AP STAs, or the communication system 100 may include another number of non-AP STAs, which are not limited in the embodiments of the present disclosure.

In addition, the communication system may be applied to a scenario of multi-device collaboration, such as multi-AP (multiple access points, multi-AP) collaboration, or multi-station collaboration.

In the embodiments of the present disclosure, the names of the AP and/or the STA are not limited. In some scenarios, the AP may also be referred to as an AP STA, that is, the AP may also be a type of STA in a sense. In some other scenarios, the STA may also be referred to as a non-AP STA.

In some scenarios, the communication device may also be a "multi-link device (MLD)", i.e., a device that can communicate through multiple communication links. Here, the multiple communication links may include communication links on different frequency bands, for example, may include communication links on millimeter wave frequency bands and/or communication links on low frequency bands. Generally, if the multi-link device is an AP, the AP may also be referred to as a "multi-link AP"; and if the multi-link device is a STA, the STA may also be referred to as a "multi-link STA".

In the embodiments of the present disclosure, the AP may be a device in a wireless network. The AP may be a communication entity such as a communication server, a router, a switch, a bridge. Alternatively, the AP may include a macro base station, a micro base station, a relay station, or the like, in various forms. Of course, the AP may be a chip or a circuit or a processing system in these devices in various forms, so as to implement the methods and functions of the embodiments of the present disclosure. The AP may be applied to a variety of scenarios, for example, the AP may be a sensor node in smart city (e.g., a smart water meter, a smart electricity meter, or a smart air detection node), a smart device in smart home (e.g., a smart camera, a projector, a display screen, TV, a speaker, a refrigerator, or a washing machine), a node in Internet of Things, an entertainment terminal (e.g., a wearable device such as AR or VR device), a smart device in smart office (e.g., a printer or a projector), a vehicle-to-everything device in vehicle-to-everything, some infrastructures in daily life scenario (e.g., a vending machine, a self-service navigation desk in supermarkets, a self-service cashier device, or a self-service ordering machine), or the like.

In some implementations, a role of the STA in a communication system is not fixed. In some scenarios, the STA may serve as an AP. For example, in a scenario in which a mobile phone is connected to a router, the mobile phone may be a non-AP STA, while in a scenario in which that mobile phone serves as a hotspot for other mobile phones, that mobile phone plays the role of an AP.

In the embodiments of the present disclosure, the STA in the embodiments of the present disclosure may be a device with wireless receiving and transmitting functions, such as a device that supports the 802.11 series of protocols and may communicate with an AP or other STAs. For example, a STA is any user communication device that allows a user to communicate with an AP and then communicate with WLAN. For example, the STA is user equipment (UE), a mobile station (MS), a mobile terminal (MT), an access terminal, a user unit, a user station, a mobile console, a mobile platform, a remote station, a remote terminal, a mobile device, a user terminal, a terminal, a wireless communication device, a user agent or user device, or the like.

The STA in the embodiments of the present disclosure may also be a device that provides voice/data connectivity for users, such as a handheld device or an in-vehicle device with a wireless connection function. For example, the STA may be a mobile phone, a tablet computer, a laptop computer, a PAD, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, a cellular phone, a wireless phone, a session initiation protocol (SIP) phone, a wireless local loop (WLL) station, a personal digital assistant (PDA), a handheld device with wireless communication function, a computing device or other processing devices connected to a wireless modem, an in-vehicle device, a wearable apparatus, a terminal device in 5G network or a future evolved public land mobile communication network (PLMN), or the like, which is not limited in the embodiments of the present disclosure.

As an example rather than a limitation, in the embodiments of the present disclosure, the STA may also be a wearable device. The wearable device may also be referred to as a wearable smart device, which is a general term for wearable devices developed by performing the intellectualized design on daily wear by applying wearable technology, such as glasses, gloves, watches, clothing, and shoes. For example, the wearable devices may include smart watches or smart glasses, as well as devices that only focus on a certain type of application function and need to be used in conjunction with other devices (such as smart phones), such as various smart bracelets and smart jewelry for monitoring vital sign, or the like.

In addition, in the embodiments of the present disclosure, the STA may also be a terminal device in the Internet of Things (IoT) system. IoT is an important part of the future development of information technology, whose main technical characteristic is to connect objects to the network through communication technology, thereby establishing an intelligent network of human-machine interconnection and object-to-object interconnection. In the embodiments of the present disclosure, the IoT technology may provide massive connections, deep coverage, and low power consumption for terminals through, for example, narrow band (NB) technology.

In addition, in the embodiments of the present disclosure, the STA may be a device in vehicle-to-everything system. The communication modes in the vehicle-to-everything system are collectively referred to as V2X (X represents everything). For example, the V2X communication includes: vehicle-to-vehicle (V2V) communication, vehicle-to-roadside infrastructure (V2I) communication, vehicle-to-pedestrian (V2P) communication, vehicle-to-network (V2N) communication, or the like.

In addition, in the embodiments of the present disclosure, the STA may further include a sensor of subject such as a smart printer, a train detector, or a gas station, whose main functions include collecting data (for some of terminal devices), receiving control information and downlink data from an AP, and transmitting electromagnetic waves to transmit data to the AP.

Furthermore, the AP in the embodiments of the present disclosure may be a device for communicating with a STA, and the AP may be a network device in a wireless local area network. The AP may be used to communicate with the STA through the wireless local area network.

From the perspective of the communication standards supported by the AP, in some implementations, the AP may be a device supporting the 802.11be standard. The AP may also be a device that supports various current and future 802.11 family WLAN standards, such as 802.11ax, 802.11ac, 802.11n, 802.11g, 802.11b, and 802.11a.

From the perspective of the communication standards supported by the STA, in some implementations, the non-AP STA may support the 802.11be standard. The non-AP STA may also support various current and future 802.11 family wireless local area networks (WLAN) standards such as 802.11ax, 802.11ac, 802.11n, 802.11g, 802.11b and 802.11a.

In the embodiments of the present disclosure, there is no limitation on the frequency bands supportable by the WLAN technology. In some implementations, the frequency bands supportable by the WLAN technology may include, but are not limited to: low frequency bands (e.g., 2.4 GHz, 5 GHz, and 6 GHz) and high frequency bands (e.g., 45 GHz and 60 GHz).

It should be understood that the specific forms of the STA and the AP in the embodiments of the present disclosure are not particularly limited and are merely illustrative herein.

Co-located-device interference

The co-located-device interference refers to interference caused by certain operating frequency bands of a wireless fidelity (Wi-Fi) station being adjacent to operating frequency bands of co-located-device other systems. That is, in a case where a station device is in a receiving state and another system port is in a transmitting state, the party in the receiving state will experience severe adjacent channel interference.

Adjusting spatial stream

Related technologies propose a solution for periodically adjusting the number of spatial streams (NSS) to cope with a co-located-device interference scenario with a non-Wi-Fi system. It is assumed that there are two links on a non-AP MLD and an AP MLD, namely link1 and link2, the number of spatial streams on link1 is m, and the number of spatial streams on link2 is n. Under the premise of ensuring that the total number of spatial streams remains unchanged, the number of spatial streams on link1 and the number of spatial streams on link2 may be adjusted periodically.

Exemplarily, FIG. 2 shows an example of periodically adjusting NSS of MLD. MLD announces that the maximum NSS is equal to m on link1 (NSS = m) and the maximum NSS is equal to n on link2 (NSS = n) through the ultra-high reliability (UHR) feature operation element in an association request frame. In the first part of each time period (with a duration equal to T), a non-AP MLD on link1 cannot be transmitted due to co-time division with an overlapping basic service set (OBSS). The NSS on link1 is 0 (NSS = 0), the MLD handovers m radio chains from link1 to link2, and then NSS on link2 becomes m+n. In the second part of each time period, transmission capability of the non-AP MLD on link1 is restored. The MLD handovers the m radio chains back to link1. The NSS on link1 returns m and the NSS on link2 returns n.

The periodicity spatial stream adjustment solution is only applicable to scenarios in which services of co-located-device other communication systems exhibit general regularity. That is, in each period, the service type, service time and other characteristics of co-located-device other communication systems are exactly identical, without involving a reporting process of co-located-device interference information. However, the services of co-located-device other communication systems do not necessarily exhibit regular periodicity, thus the non-access point station device is required to report interference information of co-located-device other communication systems to accomplish adaptive interference coordination operation.

Target wake time (TWT) technology

The TWT technology is mainly used to control wake time of a wireless device to reduce power consumption of the device. The TWT mechanism usually involves interaction and negotiation between a STA and an AP. A schedule between the STA and the AP is established, and the schedule consists of TWT time periods, serving as a service period (SP) of the TWT. When the time period negotiated by the STA and the AP ends, the STA wakes up and waits for a trigger frame transmitted by the AP. After receiving the trigger frame, the STA exchanges data with the AP. After completing data exchange, the STA will enter a sleep state again. The TWT mechanism may be dynamically adjusted and optimized according to the actual usage of the device and changes in the environment.

The TWT mechanism allows multiple devices to negotiate with each other to determine their respective wake times and frequencies. By staggering wake time intervals of various devices, it is possible to avoid multiple devices operating in a same frequency band at same time, thereby reducing the adjacent channel interference. In addition, the TWT mechanism may also be used to solve the problem of co-located-device interference by adjusting wake time of related devices through negotiating the schedule to control uplink/downlink transmission.

Based on the TWT technology, restricted target wake time (R-TWT) technology has been derived. The R-TWT technology aims to solve the problems of low-latency services and real-time application traffic. The R-TWT technology increases a probability of scheduled STAs acquiring channels through restricting channel access of unscheduled STAs, thereby improving the probability of STAs scheduled using the R-TWT technology successfully competing for channels. The adoption of R-TWT may reserve an R-TWT service period (SP) in advance and avoid the impact of other Wi-Fi nodes on the SP. According to the transmission opportunity (TXOP) and backoff rules of R-TWT in 802.11be, when transmission occurs outside the service period negotiated by the STA and the AP, any STA as a TXOP holder should ensure that the TXOP ends before start time of the R-TWT SP. In addition, before starting to transmit any physical layer protocol data unit (PPDU), any STA should check whether there is sufficient time to complete frame exchange before the R-TWT SP starts. If there is insufficient time, the STA should delay transmission. If acting as a TXOP holder, the AP should ensure that the TXOP ends before the start time of the R-TWT SP.

Point-to-point (P2P) TWT

The impact of predictable interference and unpredictable interference on device coexistence is discussed in the related art. In the related proposals, a P2P TWT solution has been proposed to address the interference problem in device coexistence. As shown in FIG. 3, a non-access point station device notifies its infrastructure access point device of unavailable period through a P2P TWT protocol. During the P2P TWT service, the non-access point station device is in a sleep (dormant) state, and the access point device does not transmit data to the non-access point station device during this period. At this time, co-located-device other systems may multiplex time for a basic service set (BSS) and time for a P2P group operating (P2P TWT service period). If receiving a clear indication that the non-access point station device is in an awake state and an available state, the access point device may transmit a data frame to the non-access point station device. Using P2P TWT to determine a completely unavailable time period for various devices as a P2P TWT service period, a transmission time interval of the Wi-Fi system is staggered from that of co-located-device other communication systems.

The TWT mechanism may only implement sleep for the entire link. In actual practice, only some of sub-channels of the Wi-Fi link interfere with co-located-device other systems. If the entire link is completely sleeping, the transmission capacity of Wi-Fi will be reduced. There is a lack of an adaptive adjustment design according to the interference situation of sub-channels, to allow only interfered sub-channels to sleep while other non-interfered sub-channels operate normally.

Beam link maintenance timer

The related technology uses a beam link maintenance timer to maintain a trained link, and duration of the link maintenance timer is negotiated by a transmitting end a receiving end of the link. When the transmitting end of the link receives an immediate response or an acknowledgment (such as an acknowledgment (Ack) frame, a block acknowledgment (BA), a directional multigigabit (DMG) composition time stamp (CTS), or a DMG decoding time stamp (DTS)) transmitted by the receiving end, the transmitting end and the receiving end set the beam link maintenance timer to the beam link maintenance timer time. After the setting is completed, the beam link maintenance timer starts counting down and expires when the timer reaches zero. In response to the expiration of the beam link maintenance timer, the STA performs beamforming again.

As mentioned above, other systems (such as a co-located-device system) may cause interference to the Wi-Fi system, so as to affect the data transmission of the Wi-Fi system. However, the related technology has not yet been able to effectively solve this problem.

In light of this, the embodiments of the present disclosure provide a method for wireless communication. In the present disclosure, a first device may transmit a first frame to a second device to indicate interference coordination operation information of one or more links and/or one or more sub-channels/operating frequency bands. Based on the interference coordination operation information, it helps to coordinate the interference on the transmission link and/or sub-channel/operating frequency band, thereby reducing the impact on data transmission of the wireless communication system.

Exemplarily, the method may be applied to a Wi-Fi system, a multi-link operation (MLO) and/or a non-MLO scenario. The method may be performed by a first device and a second device in a Wi-Fi system. For example, the first device may be an access point device in the Wi-Fi system, and the second device may be a non-access point station device in the Wi-Fi system. For another example, the first device may be a non-access point station device in the Wi-Fi system, and the second device may be an access point device in the Wi-Fi system. Here, non-access point station devices include a non-access point multi-link device (non-AP MLD) and a non-MLD non-access point station (non-MLD non-AP STA) device; and access point devices include an access point multi-link device (AP MLD) and a non-MLD access point (non-MLD AP) device. As an example, the non-access point station device may support multiple communication systems (such as Wi-Fi, Bluetooth, etc.) at the same time, and the non-access point station device may obtain information (such as communication mode) of other coexisting systems.

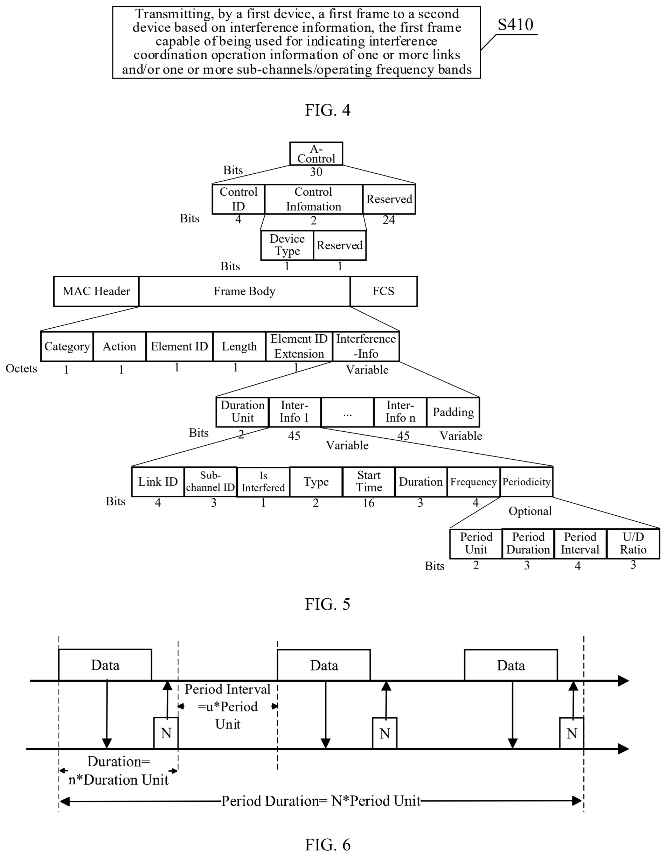

The method for wireless communication of the embodiments of the present disclosure may include, as shown in FIG. 4, step S410. In step S410, a first device transmits a first frame to a second device based on interference information, where the first frame may be used for indicating interference coordination operation information of one or more links and/or one or more subchannels/operating frequency bands.

Here, the interference information may be interference information of other systems. As an example, in a case where the method is applied to a Wi-Fi system, the interference information may be interference information of a co-located-device system. For example, in a case where a non-access point station device of the Wi-Fi system is also a device in other non-Wi-Fi systems (such as a Bluetooth system), interference will occur when certain operating frequency bands of the non-access point station device of the Wi-Fi system are adjacent to the operating frequency bands of other non-Wi-Fi systems. That is, in a case where a station device is in a receiving state and another system port is in a transmitting state, the party in the receiving state will experience severe adjacent channel interference.

In the embodiments of the present disclosure, there are three types of interference coordination operation information, which are described individually below.

First-type interference coordination operation information

In some implementations, the interference coordination operation information may be used for instructing an interfered sub-channel/operating frequency band of an interfered device to not operate during unavailable time. The unavailable time may be determined based on the interference information. For example, the interfered sub-channel/operating frequency band not operating may mean that the interfered sub-channel/operating frequency band enters a sleep (dormant) state. Based on the interference coordination operation information, it is possible to enable the interfered sub-channel/operating frequency band to not operate during interference time, while the non-interfered sub-channel/operating frequency band continues to operate, which helps to avoid interference without affecting data transmission of the non-interfered sub-channel/operating frequency band. It is worth noting that the interference coordination operation information is applicable to both MLO and non-MLO scenarios.

Here, the unavailable time may be included in or not included within a first reserved service period, the first reserved service period is determined based on interference time, and a non-interfered sub-channel/operating frequency band of the interfered device operates within the first reserved service period. For example, the interference time may be set as the first reserved service period, and the unavailable time may be included within the first reserved service period, thus the interfered sub-channel/operating frequency band of the interfered device does not operate within the first reserved service period. For another example, the interference time may be set as the first reserved service period, and the unavailable time may not be included within the first reserved service period, thus the interfered sub-channel/operating frequency band of the interfered device does not operate outside the first reserved service period. Exemplarily, the first reserved service period may be a TWT SP or an R-TWT SP. Based on the first reserved service period, it helps to improve the accuracy of interference coordination.

Based on this, the first frame may include first information, and the first information may be used for indicating the unavailable time of the interfered sub-channel/operating frequency band.

As an example, the first information may include one or more of the following types of information: a link identity (ID) to which the interfered sub-channel/operating frequency band and/or the non-interfered sub-channel/operating frequency band belong; an ID of the interfered sub-channel/operating frequency band and/or the non-interfered sub-channel/operating frequency band; an operating frequency band of the interfered sub-channel/operating frequency band and/or the non-interfered sub-channel/operating frequency band; a type of interference; a time slot of the unavailable time; whether the interfered sub-channel/operating frequency band and/or the non-interfered sub-channel/operating frequency band is a master channel; or a minimum time slot unit. Based on the first information, it helps the second device clearly determine the interfered sub-channel/operating frequency band and/or the non-interfered sub-channel/operating frequency band, as well as information related to interference.

The first frame may perform indicating based on a negotiation process of the first reserved service period. As an example, the first frame may carry a first element, and the first element may be used for negotiating a first reserved service period. For example, if the first reserved service period is a TWT SP, the first frame may be a management frame for negotiating the TWT SP (e.g., a TWT request (Req) or response (Resp) frame); and if the first element may be a TWT element, the first information may be carried in the TWT element.

Based on the first-type interference coordination operation information, the channel access rules within the first reserved service period are described below, taking the first reserved service period being the R-TWT SP as an example (the first device being an access point device of the Wi-Fi system, and the second device being a non-access point station device of the Wi-Fi system).

(1) Channel access rules within R-TWT SP

After the R-TWT service period has been negotiated by the non-access point station device and the access point device, the non-access point station device should transmit and receive frames only on sub-channels that are indicated as available in the TWT element. If the non-access point station device attempts to transmit frames on a sub-channel that does not belong to its R-TWT service period or is within the unavailable time, the access point device should ignore these frames; and the access point device should respond to only those frames received on sub-channels that are indicated as available thereby within the TWT SP.

(2) Channel access rules outside R-TWT SP

Outside the TWT SP, one of the following may be adopted: ① in a case where the non-access point station device operates in an active mode in R-TWT, the non-access point station device is always in an awake state, and the access point device and the non-access point station device may compete for channels for data transmission according to Wi-Fi service requirements; and ② in a case where the non-access point station device operates within a power save (PS) mode in R-TWT, the non-access point station device is in a sleep state outside the SP, and the access point device cannot transmit data to the non-access point station device.

## Second-type interference coordination operation information

It is worth noting that the interfered link cannot meet the service transmission requirements if it does not operate during interference time. For example, in a case where a Wi-Fi system suddenly has a large number of uplink/downlink services to be transmitted, the interfered link that does not operate may cause asymmetric uplink and downlink transmission. Moreover, for non-periodic co-located-device interference, its interference time is unpredictable, and it may be difficult to ensure that the interfered link does not operate during the interference time. For example, in a case where the interference of a co-located-device system is of a burst type, such as the sudden short-term interference of Bluetooth low energy (BLE), it is difficult to acknowledge the interference time.

Therefore, in some other implementations, the interference coordination operation information may be used for instructing all or part of transmission or reception resources on an interfered link to be transferred to a non-interfered link, enabling the interfered link to not operate or enabling the interfered link to reserve part of the transmission resources for transmission or reception (e.g., for monitoring). Here, the interfered link and the non-interfered link may be determined based on the interference information, and the interfered link may be a link interfered within a specific time period. For example, in a case where a Wi-Fi system suddenly has a large number of uplink/downlink services to be transmitted, which makes it impossible to meet the service requirements of the Wi-Fi system, or in a case where interference caused by other systems is non-periodicity interference, the first device may transmit such interference coordination information. Based on this, the service data on the interfered link may still be transmitted, which helps to ensure service transmission or avoid the impact of non-periodicity interference. It is worth noting that the interference coordination operation information is applicable to MLO scenarios, that is, the device supports operating in multiple links or frequency bands at same time, and the total number of links and the number of interfered links or non-interfered links are not limited.

Based on this, the first frame may include second information, and the second information may be used for indicating a distribution of a number of spatial streams on the interfered link and on the non-interfered link. The first device may transmit the first frame to one link among multiple links. Exemplarily, the first frame is a first link-indicator frame (which will be described in detail below) or a first multi-user request to send (MU-RTS) frame. After receiving the first frame, the second device may transmit a response frame of the first frame, such as an ACK frame or a CTS frame, to the first device. Based on the second information, it helps the second device clearly know how to adjust the number of spatial streams on each link.

As an example, the distribution of the number of spatial streams indicated by the second information may be: that a number of spatial streams on the interfered link is 0, and a number of spatial streams on the non-interfered link is m+n, m being an initial number of spatial streams on the interfered link, and n being an initial number of spatial streams on the non-interfered link. That is, all of the spatial streams on the interfered link may be transferred to the non-interfered link to ensure that service transmission is not affected by interference.

As another example, the distribution of the number of spatial streams indicated by the second information may be: that a number of spatial streams on the interfered link is 1, and a number of spatial streams on the non-interfered link is m+n-1, m being an initial number of spatial streams on the interfered link, n being an initial number of spatial streams on the non-interfered link, and one spatial stream on the interfered link is used for channel monitoring. That is, all of spatial streams on the interfered link may be transferred to the non-interfered link, but one spatial stream is reserved on the interfered link for channel monitoring to ensure that service transmission and channel monitoring are not affected by interference. It is worth noting that the number of spatial streams reserved for channel monitoring on the interfered link is not limited, and there may be multiple reserved spatial streams may be multiple spatial streams.

The second information may include one or more of the following types of information of each link: a link ID; a number of available spatial streams (NSS); a link operating frequency band; spatial stream handover time; a maximum NSS limit; a maximum modulation and coding scheme (MCS) limit; or a maximum PPDU size limit. Based on the second information, it helps the second device clearly determine the number of spatial streams on each link.

The method for restoring the spatial streams on each link is described in detail as follows.

In some implementations, an initial state of the distribution of the number of spatial streams is restored based on timing end of a first timer, and a timing duration of the first timer is determined by the first device. That is, in response to the timing end of the first timer, the initial state of the distribution of spatial streams on each link is restored. Furthermore, a start time of the first timer is determined based on the time when the first device receives a response frame of the first frame. That is, in a case where the first device receives the response frame of the first frame from the second device, the first device and the second device may start the first timer. Based on the first timer, it helps to conveniently restore the initial state of the distribution of the number of spatial streams.

In some other implementations, the method shown in FIG. 4 further includes: transmitting, by the first device, a second frame to the second device. The second frame may be used for indicating restoration of the initial state of the distribution of the number of spatial streams. That is, the first device may transmit an indication of restoring the number of spatial streams to the second device, which helps the second device clearly determine the time of the distribution of the number of spatial streams. Furthermore, the second frame may be a first link-indicator frame.

It is worth noting that based on the second-type interference coordination operation information, request to send (RTS)/clear to send (CTS) frame is adopted in the embodiments of the present disclosure to perform TXOP reservation on a 5GHz link. In practice, multiple access methods may be adopted, and there is no restriction on the access mechanism herein.

Third-type interference coordination operation information

In some other implementations, the interference coordination operation information may be used for instructing an interfered device to perform, in synchronization with an interference system, transmission and reception on an interfered link, or the interfered device to not operate on the interfered link in response to that the interference system performs transmission and reception. For example, in a case where a Wi-Fi system is interfered by a co-located-device system, and co-located-device other systems of an access point station device transmit data, an interfered link of the Wi-Fi system performs uplink transmission or does not perform data transmission; or the co-located-device other systems of the access point station device receive data, the interfered link of the Wi-Fi system performs downlink transmission or does not perform data transmission. It helps to ensure data transmission on the interfered link while avoiding interference. It is worth noting that the interference coordination operation information is applicable to both MLO and non-MLO scenarios.

Based on this, the first frame may include third information, where the third information may be used for indicating an uplink/downlink transmission rhythm of the interfered link within a first reserved service period, and the first reserved service period may be determined based on time when the first device or the second device transmits data in the interference system. For example, in a case where the first device or the second device is a non-access point station device in a Wi-Fi system, the time when the first device or the second device transmits data in the co-located-device system may be set to the first reserved service period, which helps the first device determine the uplink/downlink transmission rhythm of the interfered link. Here, the first reserved service period may be a TWT SP or an R-TWT SP.

In some implementations, the uplink/downlink transmission rhythm of the interfered link within the first reserved service period is: that on the interfered link, the interfered device performs uplink transmission within the first reserved service period. That is, in a case where the first device or the second device transmits data in the interference system, the first device or the second device only performs uplink transmission in the original system (the system to which the method for wireless communication of the embodiments of the present disclosure is applied) within the first reserved service period, thereby avoiding adjacent channel interference. It is worth noting that the uplink/downlink transmission rhythm is applicable to interfered devices in an active mode.

In some other implementations, the uplink/downlink transmission rhythm of the interfered link within the first reserved service period is: that on the interfered link, the interfered device distinguishes between uplink transmission and downlink transmission within different first reserved service periods. That is, in a case where the first device or the second device transmits data in the interference system, the first device or the second device performs uplink transmission and downlink transmission respectively within different first reserved service periods in the original system, thereby ensuring data transmission and reception while avoiding adjacent channel interference. It is worth noting that the uplink/downlink transmission rhythm is applicable to interfered devices in a PS mode.

In yet some other implementations, the uplink/downlink transmission rhythm of the interfered link within the first reserved service period is: that on the interfered link, the interfered device first performs uplink transmission and then performs downlink transmission within the first reserved service period. That is, in a case where the first device or the second device transmits data in the interference system, the first device or the second device first performs uplink transmission and then performs downlink transmission in the original system within the same first reserved service period, which may also ensure that data transmission and reception are the completely, while avoiding adjacent channel interference. It is worth noting that the uplink/downlink transmission rhythm is also applicable to interfered devices in a PS mode.

The third information may include one or more of the following types of information of the interfered link within the first reserved service period: a minimum time slot unit; a ratio between uplink time slot and downlink time slot; an uplink/downlink indication; or a reverse direction operation indication, which may be used for indicating whether to change transmission direction within the first reserved service period. Based on the third information, the second device may clearly determine the uplink/downlink transmission rhythm within the first reserved service period.

The first frame may perform indicating based on a negotiation process of the first reserved service period. As an example, the first frame may carry a first element, and the first element may be used for negotiating the first reserved service period. For example, if the first reserved service period is a TWT SP, the first frame may be a management frame for negotiating the TWT SP; and if the first element may be a TWT element, the TWT element may include the third information.

Furthermore, the method shown in FIG. 4 may further include: within the first reserved service period, dynamically indicating, by the first device, an uplink/downlink transmission direction and/or a ratio between uplink transmission and downlink transmission to the second device. For example, for constantly changing interference, the first device may dynamically indicate the uplink/downlink transmission direction and/or the ratio between uplink transmission and downlink transmission to the second device within the first reserved service period, which helps the uplink/downlink transmission rhythm of the second device adapt to change of interference.

In some implementations, the interfered link may be synchronized with the interference system at a time slot end point of a last time slot within the first reserved service period, which helps to implement synchronous transmission and reception of the interfered link and the interference system.

In some implementations, the uplink/downlink transmission rhythm of the interfered link within the first reserved service period does not affect channel monitoring capability within the first reserved service period.

In some implementations, the method shown in FIG. 4 may further include: within the first reserved service period, indicating, by the first device, related information of a next first reserved service period to the second device. That is, the first device may explicitly indicate the related information of the next first reserved service period to the second device, which helps the second device clearly determine the next first reserved service period.

Furthermore, a management frame for establishing the first reserved service period may include a first mode field, and the first mode field may be used for indicating that an operating mode of the first reserved service period is an explicit operating mode or an implicit operating mode. That is, in a case where the first reserved service period is established, the first device and the second device may clearly determine the operating mode through the first mode field in the management frame. If the operating mode is an explicit operating mode, the first device may indicate the related information of the next first reserved service period to the second device within the first reserved service period.

It should be noted that if data transmission is not completed within the first reserved service period, the data transmission will continue within the next first reserved service period.

The above interference information is described below.

As an example, the interference information may include one or more of the following types of information at a sub-channel/operating frequency band level: an indication of whether a sub-channel/operating frequency band is interfered; a type of interference; start time of interference; an operating frequency band of an interfered system; uplink and downlink transmission time of the interfered system; total transmission time of the interfered system; a minimum time slot unit of the interfered system; or related information of periodicity interference. Based on the interference information, it helps the first device clearly determine the interfered sub-channel/operating frequency band and the interference situation, so as to accurately determine the interference coordination operation information.

In some implementations, the interference information may be reported by the second device. For example, in a case where the second device is a non-access point station device in a Wi-Fi system, the second device may learn interference of a co-located-device system and report it to the first device. Furthermore, the second device may carry the interference information in a first interference information frame (which will be described in detail below) for reporting. As an example, the first interference information frame may include a plurality of interference information subfields, and each of the interference information subfields may be used for carrying interference information of one sub-channel/operating frequency band.

In some implementations, reporting of the interference information may be triggered based on a third frame of the first device, where the third frame is used for instructing one or more second devices to report the interference information. That is, the first device may transmit a trigger frame for reporting interference information to the second device to trigger the second device to report the interference information. The third frame may be a first interference information trigger frame (which will be described in detail below), the first interference information trigger frame may include a first request field, and the first request field may be used for indicating whether to request to report the interference information.

It is worth noting that based on the third-type interference coordination operation information, if data transmission is not completed within the first reserved service period, the data transmission will continue within the next first reserved service period.

Frame structure

The structures of various frames mentioned above are described in detail below. It is worth noting that the frame structure design in the present disclosure takes the interference of the Wi-Fi system by the co-located-device system as an example (Bluetooth is a co-located-device system, with a parameter value based on Bluetooth interference characteristics as an example). It is worth noting that the structure and field meaning of each frame described below are only examples and are not specifically limited in the present disclosure.

First interference information frame

The first interference information frame may include a device type indication, a minimum time unit of the interference information at the sub-channel level, a length of classic time slot of Bluetooth, an indication of whether a sub-channel at the sub-channel level is available, a type of interference, start time point of interference, an operating frequency band of an interference system, total transmission time of the interference system, a minimum time slot unit of the interference system, and related information of periodicity interference. To facilitate understanding, a co-located-device interference information (CDI-info) frame is used below to represent the first interference information frame.

As an example, as shown in FIG. 5, the CDI-info frame may be designed based on architecture of an action frame.

A medium access control (MAC) header field of the CDI-info frame may include a high throughput (HT) control field (not shown in FIG. 5), totaling 32 bits. The first two bits (not shown in FIG. 5) of the HT control field are both 1, indicating that the HT control is of a high-efficiency (HE) variant type. The remaining bits of the HT control field are an A-control field, shown in FIG. 5, with a length of 30 bits. The A-control field may include a device link type field, with a length of 6 bits. Here, a control ID field uses the current reserved bits, taking a value as 6. A control information field may include the following subfields: a device type subfield that indicates whether a current device is a multi-link device or a single-link device, with a value of 0 indicating that the device is a single-link device, and the value of 1 indicating that the device is a multi-link device. The remaining bits are reserved bits, ensuring that the HT control field is 4 octets.

The frame body field of the CDI-info frame may include a category subfield, an action subfield, and an interference-info subfield. Here, the category subfield and the action subfield may be used for indicating the type of the CDI-info frame.

Category subfield

The category field may take any reserved value between 30 and 125, indicating that the action frame is a newly defined co-located-device interference information characteristic frame. Alternatively, the value of the category field may be selected from existing category categories, such as an action frame of quality of service (QoS) category, where a category value of the QoS category is 1.

Action subfield

In a case where the category field is 30 to 125, it indicates that the action frame is of a newly defined category. A value of the action field is 0, indicating that the action frame is a CDI-info frame. In a case where the category is a defined category (such as a QoS category), the value of the action field may be a reserved value in the QoS action field, i.e., 7 to 255. Here, the action value may be 7, indicating that the action frame is a CDI-info frame.

Interference-info subfield

This field is a characteristic element of other system interference information, including a characteristic description for the co-located-device interference information. Here, a duration unit subfield is set to 2 bits, taking a value as 0 to 3. In a case where the subfield is 0, it indicates that the minimum time slot unit is 32 us. Taking Bluetooth as a co-located-device system as an example, the value is taken as 1, indicating that the minimum time slot unit is 625 us, and the remaining values are reserved. A padding subfield is used for supplementing the frame length, enabling the frame to meet an integer byte size. Each CDI-info frame may include a plurality of interference-information (inter-info) subfields (i.e., the interference information subfield mentioned above). Each of the subfields represents interference information characteristics of a system, and each of the inter-info fields may be composed of a link ID subfield, a sub-channel ID subfield, a subfield of whether is interfered, a type subfield, a start time subfield, a duration subfield, a frequency subfield, and a periodicity subfield.

The link ID subfield may indicate an ID of the link, and the link ID field is not required for the single-link device. The sub-channel ID subfield may indicate an ID of a sub-channel that operates within the negotiated TWT service period. The subfield of whether is interfered may indicate whether a sub-channel is interfered, with a value of 0 indicating that the sub-channel is available, and the value of 1 indicating that the sub-channel is unavailable. The type subfield may indicate the type of interference information, taking a value between 0 and 3, in which the value of 0 indicates that the interference information is periodic co-located-device interference, the value of 1 indicates that the interference information is non-periodic co-located-device interference, and the remaining values are reserved. The start time subfield may indicate a start time point of the co-located-device interference of the link/sub-channel, for example, start time of the first R-TWT SP scheduled by R-TWT may be consistent with that time point. The duration subfield may indicate a total duration of interference services of co-located-device other systems, taking a value between 0 and 15, in which the total duration is equal to the taken value multiplied by the minimum time slot unit. The frequency subfield may indicate an operating frequency band of the interference system, taking a value between 0 and 7, indicating the operating frequency band with different interference information characteristics. The periodicity subfield may be an optional subfield, and the subfield is enabled in a case where the type subfield takes the value of 0. The periodicity subfield may include a period unit subfield, a period duration subfield, a period interval subfield, and an uplink/downlink (U/D) ratio subfield.

Here, the period unit subfield may indicate the minimum time slot unit of periodicity interference, taking a value between 0 and 3. The value of 0 indicates that the minimum time slot unit is 32 us. Taking Bluetooth as a co-located-device system as an example, the value of 1 indicates that the minimum time slot unit is 625 us, and the remaining values are reserved. The period duration subfield may indicate a total duration of the periodicity interference information, and the total duration is equal to the taken value multiplied by the period minimum time slot unit. The period interval subfield may indicate a time interval between adjacent periodicity interferences, and the time interval is equal to the value multiplied by the minimum time slot unit. The U/D ratio subfield may indicate a time ratio between transmitting interference and receiving interference of the co-located-device system, taking a value between 0 and 7, indicating different uplink/downlink transmission ratios of Wi-Fi. Taking Bluetooth as a co-located-device system as an example, the value and meaning of the U/D ratio subfield may be shown in Table 1.

Exemplarily, the meaning of each of the subfields representing time may be as shown in FIG. 6, where N is the value of the period duration subfield, u is the value of the period interval subfield, and n is the value of the duration subfield. In this way, the duration of interference, the period interval of interference, and the period duration of interference may be calculated by using the method shown in FIG. 6.

In conjunction with Table 1, the U/D ratio subfield and the duration subfield are described in detail below by taking a classic Bluetooth service for an enhanced synchronous connection oriented (eSCO) link as an example. Exemplarily, the eSCO service consists of 12 Bluetooth time slots in total, of which two time slots are for transmission services, four time slots are retransmission windows, and the remaining six time slots are reserved windows. In the CDI-info frame, the interference-info subfield includes two inter-info in total. The first 6 time slots are represented as the first inter-info, which is represented by a periodicity field, N = 6, u = 0, and n = 2. The last 6 time slots (not involving the periodicity field) are represented as the second inter-info, in which the whether it is interfered field = 0, and the duration field = 6.

Table 1 U/D ratio subfield values and meanings

| U/D ratio subfield value | Description |
| --- | --- |
| 0 | No service |

(continued)

| U/D ratio subfield value | Description |
| --- | --- |
| 1 | 1:1 |
| 2 | 2:1 |
| 3 | 3:1 |
| 4 | 4:1 |
| 5 | 5:1 |
| 6 to 7 | Reserved |

First interference information trigger frame

To facilitate understanding, the first interference information trigger frame is represented by trigger-CDI below.

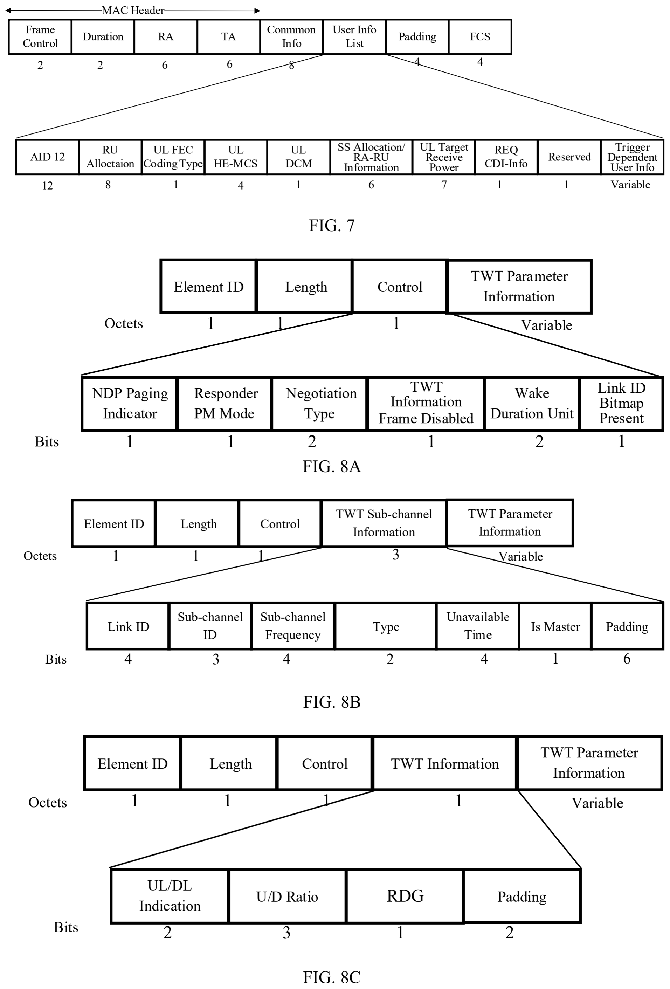

As shown in FIG. 7, the trigger-CDI frame may add a request (REQ) CDI-info subfield (i.e., the first request field mentioned above) to a user information list (user info list) field in the trigger frame, which is used for requesting the non-AP STA to transmit interference information characteristics. If REQ CDI-info = 0, it indicates that the non-AP STA is not requested to transmit the interference information characteristics; if REQ CDI-info = 1, it indicates that the non-AP STA is requested to transmit the interference information characteristics.

TWT element

As described above, the first frame may be indicated by the negotiation process of TWT SP or R-TWT SP between the AP and the non-AP STA, and the first frame may be a management frame for negotiating TWT SP or R-TWT. Exemplarily, the TWT element in the management frame may be as shown in FIG. 8A. A wake duration unit subfield in the control field of the TWT element may be set to 2 bits, taking a value between 0 and 3. The value of 0 indicates that the minimum time slot unit is 256 us, and the value of 1 indicates that the minimum time slot unit is 1 TU. Taking Bluetooth as a co-located-device system as an example, the value of 2 indicates that the minimum time slot unit is 625 us, and the remaining values are reserved.

In a case where the interference coordination operation information is used for instruct the interfered sub-channel/operating frequency band of the interfered device to not operate during the unavailable time, as shown in FIG. 8B, a TWT sub-channel information field may be added in the TWT element. This field is a sub-channel information element, which includes a link ID subfield, a sub-channel ID subfield, a sub-channel frequency subfield, a type subfield, an unavailable time subfield, a subfield of whether is a master channel, and a padding subfield. Here, the link ID subfield indicates an ID of the link. The sub-channel ID subfield indicates an ID of a sub-channel that operates within the negotiated TWT service period. The sub-channel frequency subfield indicates an operating frequency band of the sub-channel. The type subfield indicates the type of interference information, taking a value between 0 and 3. The value of 0 indicates that the interference information is periodic co-located-device interference, the value of 1 indicates that the interference information is non-periodic co-located-device interference, and the remaining values are reserved. The unavailable time subfield indicates unavailable time of the non-AP STA sub-channel, and the total unavailable time is equal to the taken value multiplied by the minimum time slot unit. The subfield of whether is a master channel indicates whether the sub-channel is the master channel. In a case where a value is 1, it is a master channel, otherwise it is an auxiliary channel. The padding subfield is used for supplementing the frame length so that the frame meets an integer byte size.

In a case where the interference coordination operation information is used for instructing all or part of transmission resources or reception resources on an interfered link to be transferred to a non-interfered link, and the interfered link and the non-interfered link are determined based on the interference information, as shown in FIG. 8C, a TWT information field may be added in the TWT element. This field is a TWT information element, which adds a U/D ratio subfield, an uplink/downlink (UL/DL) indication subfield, a reverse direction grant (RDG) subfield, and a padding subfield. Here, the U/D ratio subfield indicates a ratio between uplink transmission time slot and downlink transmission time slot that Wi-Fi needs to meet, taking a value between 0 and 7. The value of 0 indicates no service. Taking Bluetooth as a co-located-device system as an example, the value of the U/D ratio subfield is same as that shown in Table 1. The UL/DL indication subfield indicates whether uplink transmission or downlink transmission is to be performed. In a case where a value of this subfield is 1, the uplink transmission is performed, otherwise the downlink transmission is performed. The RDG subfield indicates whether to perform reverse direction transmission operation within the SP. In a case where a value is 1, the reverse direction transmission is performed, otherwise the reverse direction transmission is not performed. The padding subfield is used for supplementing the frame length so that the frame meets an integer byte size.

First link-indicator frame

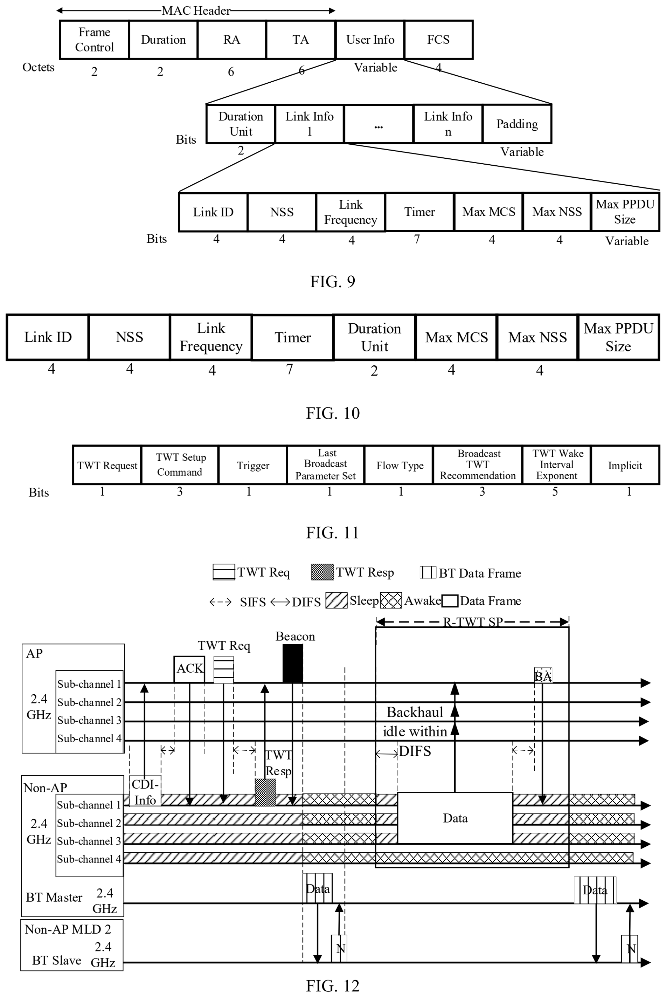

To facilitate understanding, a link-indicator frame is used for representing the first link-indicator frame. As shown in FIG. 9, multi-link indication information is carried in a user information (user info) field of the link-indicator frame. Here, the duration unit subfield may be used for indicating the minimum time slot unit. The duration unit subfield is set to 2 bits, taking a value between 0 and 3. The value of 0 indicates that the minimum time slot unit is 32 us. Taking Bluetooth as a co-located-device system as an example, the value of 1 indicates that the minimum time slot unit is 625 us. The remaining values are reserved. The link information (link info) subfield may be used for indicating the number of spatial streams of each link. The link info subfield may include a plurality of subfields, namely, a link ID subfield, an NSS subfield, a link frequency subfield, a timer subfield, a Max NSS subfield, a Max MCS subfield, and a Max PPDU size subfield.

Here, the link ID subfield may indicate an ID of the link. The NSS subfield may indicate the number of available spatial streams for the link. The link frequency subfield may indicate an operating frequency band of the link. The timer subfield may indicate spatial stream handover time, which may be 0 to 128 time slots, and 129 to 255 are reserved. In response to the timing end of the timer, the original spatial stream settings are automatically restored. Here, the maximum TXOP time in 802.11-2020 is 4.096 ms, which is 128 time slots (one time slot is 32 us). The Max NSS subfield may indicate a maximum number limit of spatial streams. The Max MCS subfield may indicate a maximum MCS limit. The Max PPDU size subfield may indicate a maximum PPDU size limit. The padding subfield may be used for supplementing the frame length so that the frame meets an integer number of octets.

MU-RTS frame

As mentioned above, the process of adjusting the distribution of the number of spatial streams may also be implemented by using a control frame (such as the MU-RTS frame). A link information element (link info element) may be added to the user info list field of MU-RTS to carry spatial stream distribution information. As shown in FIG. 10, the user info list field may include a link ID subfield, an NSS subfield, a link frequency subfield, a timer subfield, a duration unit subfield, a Max MCS subfield, a Max NSS subfield, and a Max PPDU size subfield. The meaning of each of the subfields may be found in the first link-indicator frame and will not be described in detail here.

R-TWT request type field

As described above, the non-access point station device and the access point device establish an R-TWT through a management frame, and a subfield may be added in the management frame to indicate that an operating mode of the first reserved service period is an implicit mode or an explicit mode. As shown in FIG. 11, an implicit subfield (i.e., the first mode field described above) may be added to a request type subfield of a broadcast TWT parameter set field in the TWT element to indicate that the operating mode of the first reserved service period is the implicit mode or the explicit mode. In a case where the implicit subfield takes a value of 0, it indicates that the R-TWT request is explicit, and the access point device explicitly informs the non-access point station device of the next TWT time period during data frames interaction. In a case where the implicit subfield takes the value of 1, it indicates that the R-TWT request is implicit, the non-access point station device calculates the next round of TWT service period, and the access point device will not inform the non-access point station device of the next round of TWT service period.

The frame overhead for the method for wireless communication provided in the embodiments of the present disclosure is analyzed below.

Frame overhead for reporting interference information

In a co-located-device interference scenario, since the non-access point station device needs to report the co-located-device interference information to the access point device, the frame interaction overhead will increase. A quantitative analysis of the time consumption for the frame interaction process in this scenario is conducted. Assuming that all control/management frames adopt 20 MHz bandwidth, based on the 802.11ax standard, the minimum MCS rate is 4.3 Mbps (NSS = 1, and a guard interval is 0.8 us). A classic Bluetooth time slot is 625 us, and a beacon period $T_{beacon}$ is set to 100 ms (160 Bluetooth time slots). In order to better coordinate co-located-device interference, the time period (i.e., R-TWT SP time) when Wi-Fi needs to perform interference coordination in Embodiment 1 is set to an integer multiple of the Bluetooth time slot (625 us). The frame spacing of each control frame is short interframe space (SIFS), with a length of 16 us. The following two interference information reporting scenarios are considered, and the frame overhead calculations are performed separately.

(1) Assuming that each reported information includes N pieces of interference information, and that the interference information is periodicity interference, the frame length of a CDI-info is $ceil(25 + \frac{2+45 \times N}{8})$ octets. The ceil(·) function is a round-up function. The padding subfield in the frame is used for ensuring that the frame length meets an integer number of octets.
In a case where $N = 5$, the length of a CDI-info frame is 54 octets. According to the above assumed transmission rate, transmission time for reporting interference information for one time is $T_{CDI} = \frac{54 \times 8bit}{4.3Mbps} = 100.4\mu s$ .

(2) The present disclosure further designs that the access point device transmits a trigger-CDI frame to the non-access point station device to trigger the non-access point station device to report the interference information. Considering that the reporting is triggered by the access point device, a length of the trigger-CDI frame is 34 octets, and the transmission time is obtained to be $T_{T-CDI} = \frac{34 \times 8bit}{4.3Mbps} = 63.3\mu s$ .

In a case where $N = 5$, the total time overhead of the reporting process triggered by the access point device is obtained to be $T_{T-CDI} + T_{CDI} + T_{SIFS} = 179.7\mu s$.

Frame overhead for link-indicator frame

In the second strategy, the AP MLD transmits a link-indicator frame to the non-AP MLD to indicate the current operating frequency band and the spatial stream size (NSS) of multi-link. Multi-link indication information is carried in the link-indicator frame, and the frame interaction overhead will increase. A quantitative analysis of the time consumption of the frame interaction process in this scenario is conducted. Assuming that all control/management frames adopt 20 MHz bandwidth, based on the 802.11ax standard, the minimum MCS rate is 4.3 Mbps (NSS = 1, and a guard interval is 0.8 us). A classic Bluetooth time slot is 625 us, and a beacon period $T_{beacon}$ is set to 100 ms (160 Bluetooth time slots). The frame spacing of each control frame is SIFS, with a length of 16 us.

M is set as a number of links of the Wi-Fi device, and a length of a link-indicator frame is approximately $ceil(20 + \frac{2+27 \times M}{8})$ octets. Based on the above assumed transmission rate, the length of the link-indicator frame is obtained to be 34 octets and its transmission time is $T_{Link\ Indicator} = \frac{34 \times 8bit}{4.3Mbps} = 63.3\mu s$ (taking M = 4 as an example). The ACK is generally 6 octets, and its transmission time is $T_{ACK} = \frac{6 \times 8bit}{4.3Mbps} = 11.2\mu s$ , so the total time overhead for the link indication process in that scenario is obtained to be: $T_{ACK} + T_{SIFS} = 90.5\mu s$.

It can be seen that the frame overhead for co-located-device interference information for each reporting and the overhead for a link indication are both at us level, while the overhead for data transmission of Wi-Fi is generally at ms level. The transmission time for a co-located-device interference information reporting and a link indication are much shorter than the data transmission time of Wi-Fi. The actual transmission delay is very small compared to the data transmission time and can be basically ignored. The above frame interaction time analysis is also applicable to other scenarios.

The following example illustrates the method for wireless communication in the embodiments of the present application, taking the interference of a Wi-Fi system by a co-located-device system as an example, with the co-located-device system being a Bluetooth system, in combination with Embodiment 1 to Embodiment 4. Exemplarily, the first device in Embodiment 1 to Embodiment 4 is an AP or a non-AP in the Wi-Fi system, the second device is a non-AP or an AP in the Wi-Fi system, and the interfered device is a non-AP. In the following embodiments, the non-AP STA in the Wi-Fi system and a master device in the Bluetooth system are the same device. The multi-link takes two links as an example, link1 is a 5 GHz link, link2 is a 2.4 GHz link, and the Bluetooth system operates in the 2.4 GHz frequency band. It is worth noting that the method for wireless communication of the embodiments of the present disclosure is also applicable to links in other frequency bands (e.g., 6 GHz), other numbers of links (e.g., 3), and co-located-device other systems (e.g., other non-Wi-Fi systems), which is not limited in the present disclosure.

Embodiment 1

In Embodiment 1, the interference coordination operation information is used for instructing an interfered sub-channel/operating frequency band of an interfered device to not operate during unavailable time. Exemplarily, in Embodiment 1, the method for wireless communication of the embodiments of the present disclosure may also be referred to as "a method for sub-channel co-located-device interference coordination based on R-TWT". It is worth noting that in Embodiment 1, there are two links (link1 and link2) between the non-access point station device and the access point device. Here, link2 has co-located-device interference with other systems, an operating bandwidth of link2 is 80MHz, and link2 includes 4 sub-channels, of which sub-channel 1 is the master channel, and sub-channel 4 is subjected to the co-located-device interference.

Referring to FIG. 12, the AP receives a CDI-info frame reported by a non-AP STA, where the CDI-info frame includes interference information characteristics at a sub-channel level (shown in FIG. 5). Based on this, the AP may learn that the sub-channel subjected to the co-located-device interference is sub-channel 4 and its sub-channel interference information. Therefore, the AP may set an R-TWT service period to time when a non-interfered sub-channel performs data transmission.

Continuing to refer to FIG. 12, a management frame including the TWT element is transmitted between the non-AP STA and the AP to negotiate the R-TWT service period. A sub-channel information field is added to the TWT element, which includes a link ID subfield, a sub-channel ID subfield, a sub-channel operating frequency band subfield, a type of interference subfield, a sub-channel unavailable time subfield, and a subfield of whether is a master channel. Based on the sub-channel information field, it may instruct sub-channel 4 to not operate during the R-TWT service period, and the remaining sub-channels to operate normally.

After the negotiation is completed, an R-TWT is established (the channel access rules within and outside the R-TWT SP may be as described above), and the non-AP STA performs data transmission with the access point device within the specified time according to the negotiated R-TWT plan.

As the R-TWT SP arrives, the AP transmits a trigger frame to the non-AP STA, to trigger the non-AP STA to perform data transmission on sub-channel(s) that are not subjected to the co-located-device interference, and sub-channel 4 that is subjected to the co-located-device interference does not operate. Outside the R-TWT SP, the non-AP STA enters a sleep mode to reduce power consumption.

Based on Embodiment 1, in a case where the Wi-Fi system is interfered by the co-located-device system, the interfered sub-channel does not operate, while the non-interfered sub-channel continues to operate, which may effectively reduce the impact of the co-located-device interference on the data transmission in the Wi-Fi system.

Embodiment 2

In Embodiment 2, under a multi-link framework, the AP MLD in the Wi-Fi system determines whether to trigger spatial stream adjustment and recovery based on co-located-device interference information reported by the non-AP MLD and service volume, or the non-AP MLD in the Wi-Fi system determines whether to trigger the spatial stream adjustment and recovery based on the co-located-device interference information, to transfer data transmission from an interfered link to other links to avoid co-located-device interference. Therefore, in Embodiment 2, the interference coordination operation information is used for instructing all or part of the transmission resources or reception resources on an interfered link to be transferred to a non-interfered link, and the interfered link and the non-interfered link are determined based on the interference information. For example, in Embodiment 2, the method for wireless communication of the embodiments of the present disclosure may also be referred to as "a method for co-located-device interference coordination based on all adjustment of spatial streams". It is worth noting that in Embodiment 2, the Wi-Fi system including link1 (2.4 GHz) and link2 (5 GHz) is taken as an example, where link2 has co-located-device interference with other systems. The initial distribution of spatial streams is NSS = 1 for the 2.4 GHz link and NSS = 1 for the 5 GHz link.

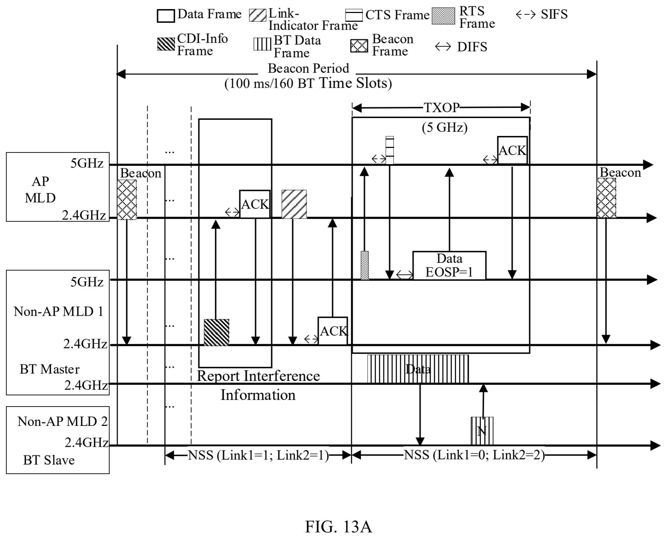

Referring to FIG. 13A, the AP MLD transmits a link-indicator frame to the non-AP MLD on the 2.4 GHz link, to instruct the NSS of the 2.4 GHz link to be 0 (NSS = 0) and the NSS of the 5 GHz link to be 2 (NSS = 2), that is, the 2.4 GHz link does not operate and Wi-Fi services are all transmitted on the 5 GHz link. After receiving the link-indicator from link2 or link1, the non-AP MLD handovers all NSSs from link2 to link1 based to the indication. That is, the NSS of link1 becomes 2, which improves the throughput in link1; the NSS of link2 becomes 0, so the non-AP MLD cannot receive or transmit any data from the AP MLD in link2 to avoid the co-located-device interference between link2 and other systems. The distribution of the spatial streams may be restored to the initial state based on the timer. The duration of the timer indicates that the operating duration after the number of spatial streams is adjusted. As the non-AP MLD receives the ACK response to the link-indicator frame from the non-AP MLD, both parties will set a timer. After the setting is completed, the timer starts counting down. As the timer reaches zero, the timing stops and the original spatial stream settings on each link are automatically restored. According to the setting of this embodiment, after the timer counts down to 0, the number of spatial streams of the 2.4 GHz link is restored to NSS = 1, and the number of spatial streams of the 5 GHz link is restored to NSS = 1.

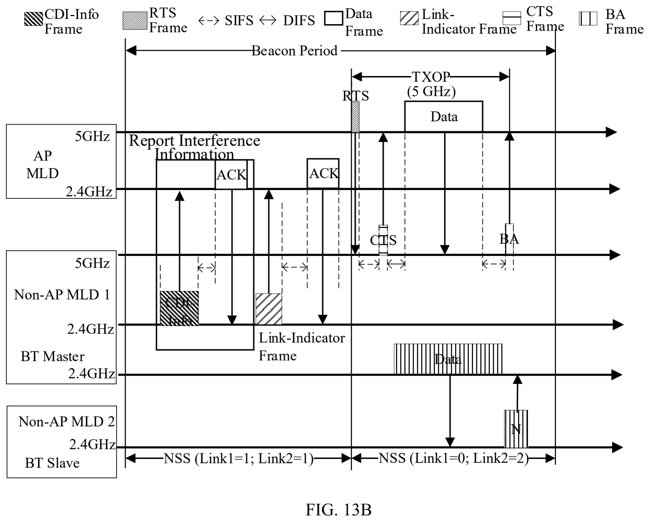

Alternatively, referring to FIG. 13B, the non-AP MLD may transmit a link-indicator frame to the AP MLD on the 2.4 GHz link, to instruct the NSS of the 2.4 GHz link to be 0 (NSS = 0) and the NSS of the 5 GHz link to be 2 (NSS = 2) in this case, that is, the 2.4 GHz link does not operate and all Wi-Fi services are transmitted on the 5 GHz link. The rest of the process is similar to that in FIG. 13A and will not be described again here.

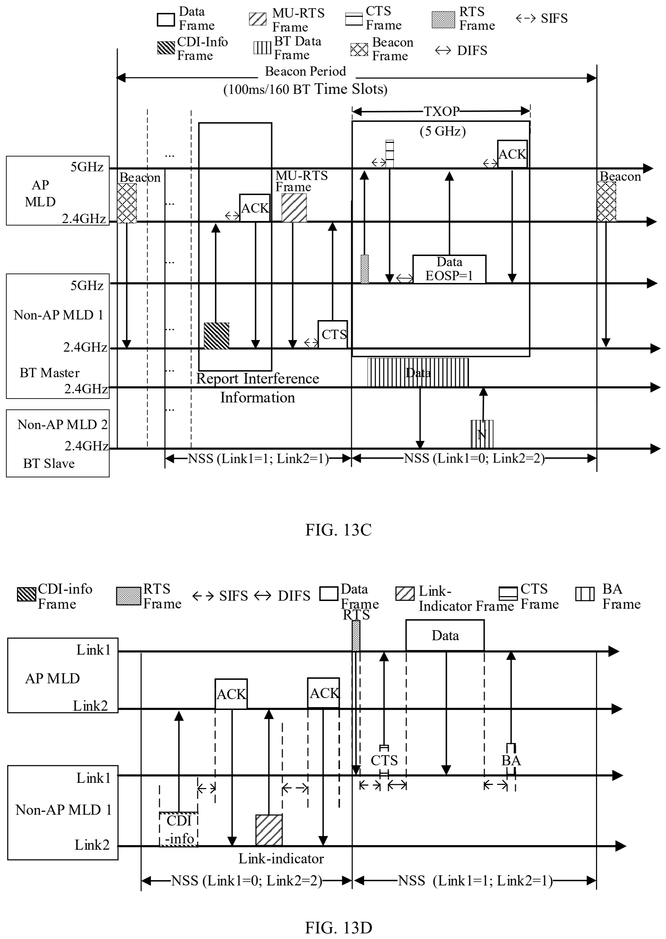

It is worth noting that referring to FIG. 13C, the link-indicator frame mentioned above may be replaced by a MU-RTS frame, which will not be described in detail here.

It is worth noting that RTS/CTS is adopted in this embodiment to perform TXOP reservation on the 5 GHz link. In practice, multiple access methods may be adopted, and there is no restriction on the access mechanism.

Continuing to refer to FIG. 13D, the distribution of spatial streams on each link may also be restored based on the indication of the link-indicator frame. The non-AP MLD transmits a link-indicator frame to the AP MLD on link2 to indicate the NSS values of the multi-link to restore the initial number of spatial streams. After receiving the link-indicator from link2, the non-AP MLD restores the original spatial stream settings on each link, that is, the NSS of link1 is 1 and the NSS of link2 is 11.

Based on Embodiment 2, by dynamically transferring transmission on the interfered link of Wi-Fi to other links, it helps to ensure that the service transmission requirements are met while avoiding interference.

Embodiment 3

In Embodiment 3, the interference coordination operation information may be used for instructing all or part of transmission or reception resources on an interfered link to be transferred to a non-interfered link, and the interfered link and the non-interfered link are determined based on the interference information. For example, in Embodiment 3, the method for wireless communication of the embodiments of the present disclosure may also be referred to as "a method for co-located-device interference coordination based on partial adjustment of spatial streams". It is worth noting that in Embodiment 3, the Wi-Fi system including link1 (2.4 GHz) and link2 (5 GHz) is also taken as an example. The initial distribution of spatial streams is NSS = 2 for the 2.4 GHz link and NSS = 1 for the 5 GHz link.

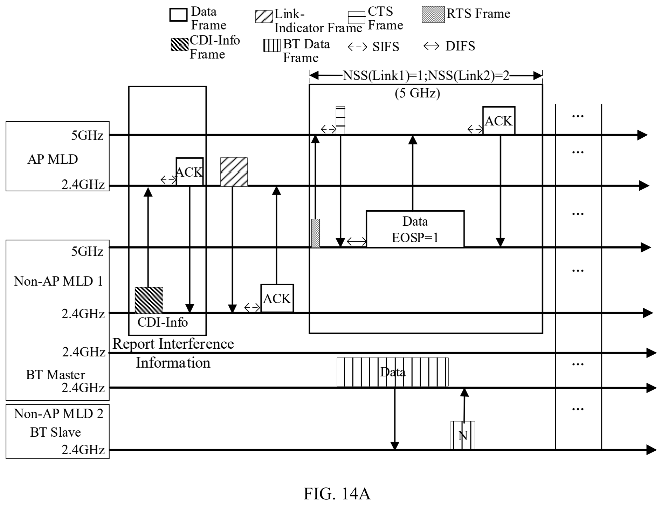

Referring to FIG. 14A, the AP MLD transmits a link-indicator frame to the non-AP MLD on the 2.4 GHz link, to instruct the NSS of the 2.4 GHz link to be 1 (NSS = 1) and the NSS of the 5 GHz link to be 2 (NSS = 2), and sets a timer to indicate the operating duration for adjusting the distribution of spatial streams. That is, during the process of adjusting the number of spatial streams, the 2.4 GHz frequency band link always reserves at least one spatial stream to perform channel monitoring on the 2.4 GHz link. Wi-Fi data services are all transmitted on the 5 GHz link. As the AP MLD receives the ACK response to the link-indicator frame from the non-AP MLD, both parties will set a timer. After the setting is completed, the timer starts counting down. As the timer reaches zero, the timing stops and the original spatial stream settings on each link are automatically restored. According to the setting of this embodiment, after the timer counts down to 0, the number of spatial streams of the 2.4 GHz link is restored to NSS = 2, and the number of spatial streams of the 5 GHz link is restored to NSS = 1.

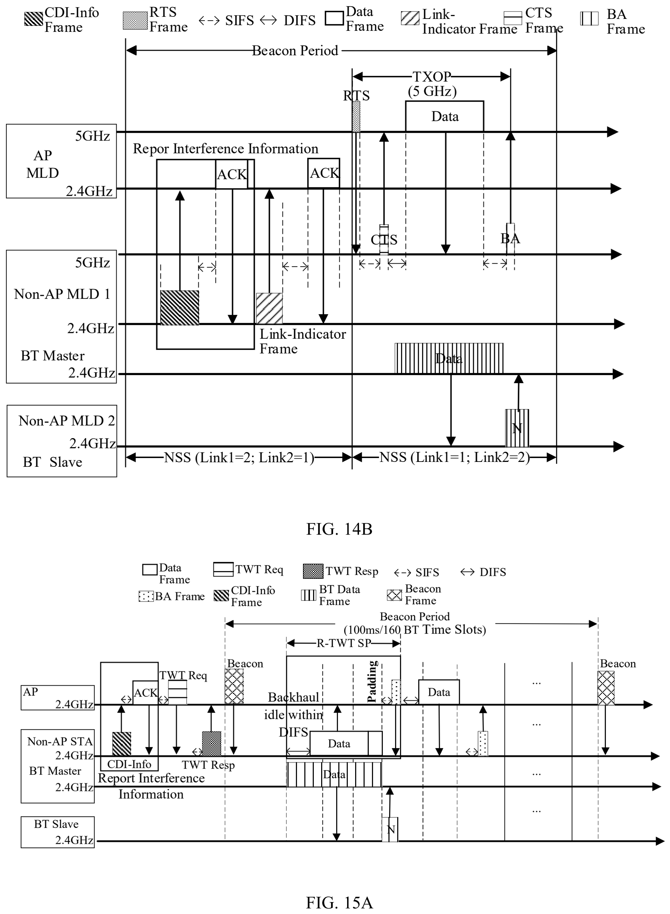

Alternatively, referring to FIG. 14B, the non-AP MLD may transmit a link-indicator frame to the AP MLD on the 2.4 GHz link, to instruct the NSS of the 2.4 GHz link to be 1 (NSS = 1) and the NSS of the 5 GHz link to be 2 (NSS = 2) in this case, and set a timer to indicate the operating duration of adjusting the number of spatial streams. The rest of the process is similar to that in FIG. 14A and will not be described again here.

RTS/CTS is adopted in this embodiment to perform TXOP reservation on the 5 GHz link. In practice, multiple access methods may be adopted, and there is no restriction on the access mechanism.

Based on Embodiment 3, by dynamically transferring part of transmission on the interfered link of Wi-Fi to other links, it helps to ensure that service transmission requirements are met while avoiding interference.

Embodiment 4

In Embodiment 4, the interference coordination operation information may be used for instructing an interfered device to perform, in synchronization with an interference system, transmission and reception on an interfered link, or the interfered device to not operate on the interfered link in response to that the interference system performs transmission and reception. For example, in Embodiment 4, the method for wireless communication of the embodiments of the present disclosure may also be referred to as "a method for synchronous transmission and reception co-located-device interference coordination based on R-TWT". It is worth noting that in Embodiment 4, the interfered link is taken as a 2.4 GHz link as an example.

In Embodiment 4, a management frame including a TWT element and a newly added implicit subfield is transmitted between the non-AP STA and the AP to negotiate the R-TWT service period. A minimum time slot unit subfield, an uplink/downlink indication subfield, a subfield of ratio between uplink time slot and downlink time slot, and a subfield of whether to perform a reverse direction operation subfield are newly added in the TWT element to enable the access point device to control the uplink/downlink transmission rhythm of Wi-Fi in the interfered link to avoid co-located-device interference.

It is worth noting that this embodiment does not require strict synchronization of the start time and end time of the transmitting/receiving of a Wi-Fi data packet with co-located-device other systems, but it is necessary to ensure that in a case where a master device of the Bluetooth transmits data to a slave device the Bluetooth, Wi-Fi performs uplink transmission or does not perform data transmission to avoid the co-located-device interference; and in a case where the slave device of the Bluetooth transmits data to the master device of the Bluetooth, Wi-Fi performs downlink transmission or does not perform data transmission to avoid the co-located-device interference.

Different operating modes of the non-access point station device in R-TWT are described as follows.

(1) In a case where the non-AP STA is in an active mode, the non-AP STA is always in an awake state. As shown in FIG. 15A, the AP will make determination and adjustment to the data transmission on the Wi-Fi side based on received interference information of co-located-device other systems, and perform R-TWT negotiation on the determined R-TWT time with the non-access point station device. In this case, R-TWT SP is the time when the master device of Bluetooth transmits data to the slave device, and the uplink/downlink indication subfield of the TWT element field is set to 1 in a case where the AP and the non-AP STA perform R-TWT negotiation, indicating that Wi-Fi uplink transmission is performed within the TWT service period. The uplink/downlink indication limits only the direction of data transmission and does not affect the channel monitoring capability. Since the Bluetooth uses frequency hopping communication, it will avoid the Wi-Fi operating channel of the co-located-device, but there is still adjacent channel interference. In addition, the Bluetooth operating bandwidth is relatively small, at 1 MHz. Without loss of generality, in a case where the Bluetooth is operating, the power detected by the Wi-Fi channel will be lower than the access threshold of enhanced distributed channel access (EDCA), so there is a relatively great probability of obtaining access opportunities within the SP. However, Wi-Fi data decoding requires lower interference power. Therefore, although the channel may be accessed at present, it cannot meet the needs of AP transmitting and STA receiving. Therefore, the STA cannot successfully perform downlink transmission within this period. As the R-TWT SP arrives, the non-AP STA competes for the channel for uplink data transmission. For example, a backhaul link is idle within the distributed inter-frame spacing (DIFS), indicating successful channel access and the start of data transmission. This embodiment does not require strict synchronization of the start time and end time of transmitting/receiving the Wi-Fi data packet with the co-located-device Bluetooth system, but requires synchronization of the Wi-Fi uplink data frame with a time slot end point of the last time slot occupied by the master device of the Bluetooth transmitting a data frame to the slave device of the Bluetooth, so that the ACK frame transmitted by the AP to the non-AP STA and a null frame replied by the Bluetooth slave device to the master device occupy the same time slot, so as to achieve synchronous transmission and reception and avoid co-located-device interference. If the end time of Wi-Fi uplink data transmission is earlier than the time slot end point of the last time slot occupied by the master device of Bluetooth transmitting data to the slave device, a padding subfield may be used for supplementing synchronization; if data transmission within the R-TWT SP is not complete, the data transmission may continue within the next R-TWT SP. Outside the R-TWT service period, the AP may compete for channels for downlink data transmission based on Wi-Fi service requirements. In a case of data frame interactions, the newly added subfield is carried to indicate the transmission direction of Wi-Fi through the designed R-TWT explicit operating mode and explicitly inform the next TWT period.

(2) In a case where the non-AP STA is in a PS mode, the non-AP STA is in a sleep state outside the SP. The AP makes determination and adjustment to the data transmission of Wi-Fi based on received interference information of co-located-device other systems, and performs R-TWT negotiation on the determined R-TWT time with the non-AP STA. If data transmission is not completed within the R-TWT SP, the data transmission will continue within the next R-TWT SP. In this embodiment, two transmission control modes are designed.

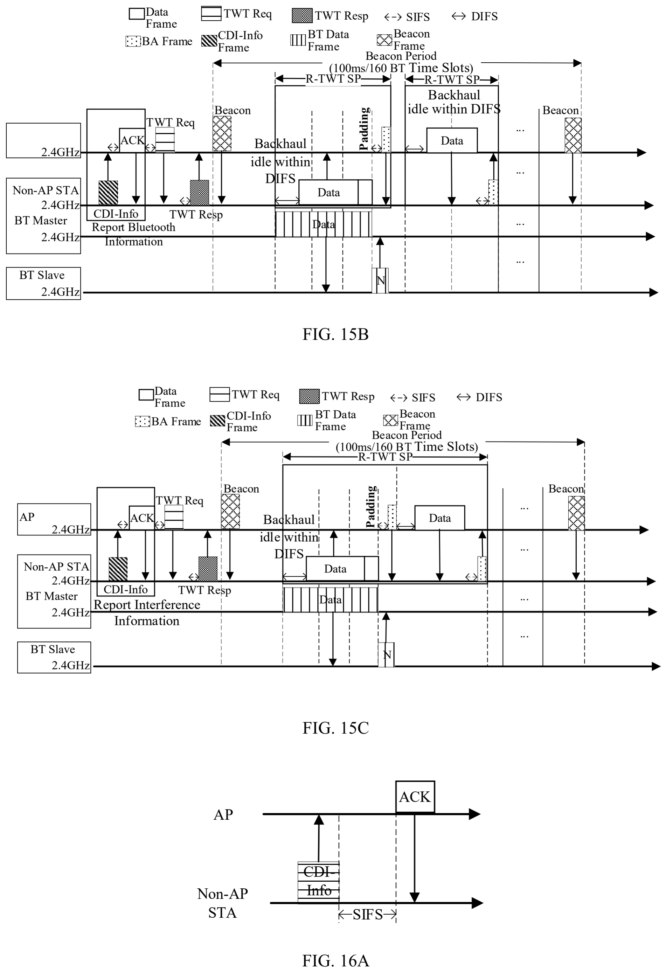

① Uplink transmission of Wi-Fi and downlink transmission of Wi-Fi are distinguished within different service periods, as shown in FIG. 15B. Classic Bluetooth follows transmit-receive mechanism, and follows the principle that the master device first transmits a data frame to the slave device, and then the slave device transmits a reply frame to the master device. To avoid adjacent channel interference, after reporting the co-located-device interference information and completing the negotiation service period with the AP, the non-AP STA instructs Wi-Fi to perform uplink transmission first in the first service period and then perform downlink transmission in the second service period, through the designed uplink/downlink indication subfield. In a case of data frame interaction, the newly added subfield is carried to indicate a transmission direction of Wi-Fi, an uplink/downlink ratio, etc., through the designed R-TWT explicit operating mode and explicitly inform the next TWT period. As the first SP of R-TWT arrives, the non-AP STA competes for the channel for uplink data transmission. The backhaul link is idle within the DIFS, indicating successful channel access and the start of data transmission. This embodiment does not require strict synchronization of the start time and end time of transmitting/receiving the Wi-Fi data packet with the co-located-device Bluetooth system, but requires synchronization of the Wi-Fi uplink data frame with a time slot end point of the last time slot occupied by transmitting of the Bluetooth system, so that the ACK frame transmitted by the AP to the non-AP STA and a null frame replied by the Bluetooth slave device to the master device occupy the same time slot, so as to achieve synchronous transmission and reception and avoid co-located-device interference. If the end time of Wi-Fi uplink data transmission is earlier than the time slot end point of the last time slot occupied by the master device of Bluetooth transmitting data to the slave device, a padding subfield is used for supplementing synchronization; if data transmission within the R-TWT SP is not completed, the data transmission will continue within the next R-TWT SP. Within the second SP, the AP competes for the channel to transmit Wi-Fi downlink data to the non-AP STA.

② In one service period, uplink transmission is performed first, and then downlink transmission is performed, as shown in FIG. 15C. Through the designed minimum time slot unit subfield, uplink/downlink indication subfield, subfield of ratio between uplink downlink time slot and downlink time slot, and a reverse direction operation subfield, the non-AP STA is instructed to perform reverse direction operation and a ratio between uplink downlink time slot and downlink time slot is instructed within the service period. In a case where the master device of the Bluetooth transmits data to the slave device of the Bluetooth, Wi-Fi performs uplink transmission; and in a case where the slave device of the Bluetooth transmits data to the master device of the Bluetooth, Wi-Fi performs downlink transmission to avoid co-located-device interference. As the R-TWT SP arrives, the non-AP STA competes for the channel for uplink data transmission. The backhaul link is idle within the DIFS, indicating successful channel access and the start of data transmission. This embodiment does not require strict synchronization of the start time and end time of transmitting/receiving the Wi-Fi data packet with the co-located-device Bluetooth system, but requires synchronization of the Wi-Fi uplink data frame with a time slot end point of the last time slot occupied by transmitting of the Bluetooth system, so that the ACK frame transmitted by the AP to the non-AP STA and a null frame replied by the Bluetooth slave device to the master device occupy the same time slot, and downlink transmission is performed based on the reverse direction operation indication without re-competing for the channel, so as to achieve synchronous transmission and reception and avoid co-located-device interference. If the end time of Wi-Fi uplink data transmission is earlier than the time slot end point of the last time slot occupied by the master device of Bluetooth transmitting data to the slave device, a padding subfield is used for supplementing synchronization; if data transmission within the R-TWT SP is not completed, the data transmission will continue within the next R-TWT SP. In a case of data frame interaction, the newly added subfield is carried to indicate a transmission direction of Wi-Fi, an uplink/downlink ratio, etc., through the designed R-TWT explicit operating mode and explicitly inform the next TWT period.

It is worth noting that in Embodiment 4, if data transmission is not completed within the R-TWT SP, the data transmission will continue within the next R-TWT SP.

Based on Embodiment 4, by controlling the uplink and downlink transmission time of the Wi-Fi device, it helps to ensure that the interfered link of the Wi-Fi system obtains more transmission opportunities while avoiding interference.

Interference information reception

The reporting of the interference information in the above-mentioned Embodiment 1 to Embodiment 4 may be shown in FIGS. 16A to 16C.

Referring to FIG. 16A, after detecting interference of co-located-device other systems and successfully competing for a channel, the non-access point station device may transmit a CDI-info frame to the access point device to report interference information of co-located-device other systems. After receiving the CDI-info frame, the access point device transmits an ACK frame to the non-access point station device for acknowledgment.

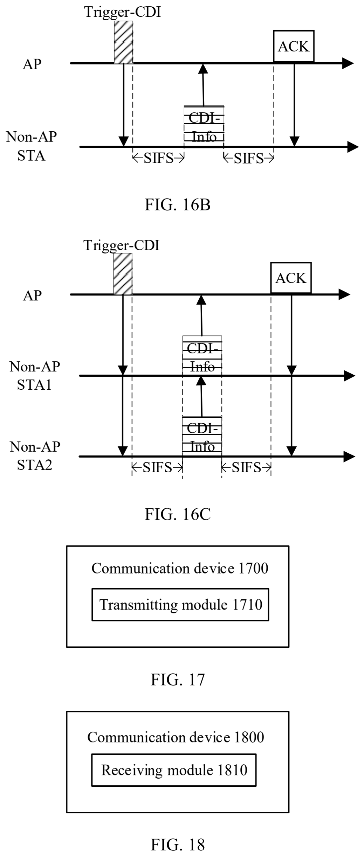

Referring to FIG. 16B, the access point device may transmit a trigger-CDI frame to the non-access point station device to trigger the non-access point station device to report the co-located-device interference information. The trigger-CDI frame includes a REQ CDI-info field, which indicates whether to request the non-access point station device to transmit interference information. After receiving the trigger-CDI, the non-access point station device transmits a CDI-info frame to the access point device to report the interference information of co-located-device other communication systems. After receiving the CDI-info frame, the access point device transmits an ACK frame to the non-access point station device for acknowledgment.

Referring to FIG. 16C, the reporting method triggered by the access point device may be extended to a multi-user scenario. The access point device may transmit a trigger-CDI frame to multiple non-access point station devices to trigger the multiple non-access point station devices to report co-located-device interference information. After receiving the trigger-CDI, the non-access point station device transmits a CDI-info frame to the access point device to report the interference information of co-located-device other communication systems. After receiving the CDI-info frame, the access point device transmits ACK frames to multiple non-access point station devices for acknowledgment.

The method embodiments of the present disclosure are described in detail above, and device/apparatus embodiments of the present disclosure are described in detail below. It should be understood that the description of the method embodiments corresponds to the description of the device/apparatus embodiments, and therefore, for parts that are not described in detail, reference may be made to the previous method embodiments.

FIG. 17 is a schematic structural diagram of a communication device provided in an embodiment of the present disclosure. Referring to FIG. 17, the communication device 1700 is a first device, including a transmitting module 1710. The transmitting module 1710 is used to transmit a first frame to a second device based on interference information, where the first frame may be used for indicating interference coordination operation information of one or more links and/or one or more sub-channels/operating frequency bands.

In this embodiment of the present disclosure, the communication device 1700 may be used to perform part or all of the method steps performed by the first device in the above-mentioned method embodiments. For example, the communication device 1700 may be used to perform part or all of the method steps performed by the first device in the solutions described above in conjunction with FIGS. 4 to 16. The communication device 1700 includes unit(s) or module(s) for performing the corresponding method steps in FIGS. 4 to 16. The method flow has been described in detail in the aforementioned implementations. The module(s) in this embodiment have the same functions or perform the same steps, which will not be repeated here. However, those skilled in the art should know that the text descriptions corresponding to FIGS. 4 to 16 may be introduced into the embodiments and correspond to the module(s) in the communication device 1700.

FIG. 18 is a schematic structural diagram of a communication device provided in another embodiment of the present disclosure. Referring to FIG. 18, the communication device 1800 is a second device, including a receiving module 1810. The receiving module 1810 is used to receive a first frame transmitted by a first device based on interference information, where the first frame may be used for indicating interference coordination operation information of one or more links and/or one or more sub-channels/operating frequency bands.

In this embodiment of the present disclosure, the communication device 1800 may be used to perform part or all of the method steps performed by the second device in the above-mentioned method embodiments. For example, the communication device 1800 may be used to perform part or all of the method steps performed by the second device in the solutions described above in conjunction with FIGS. 4 to 16. The communication device 1800 includes unit(s) or module(s) for performing the corresponding method steps in FIGS. 4 to 16. The method flow has been described in detail in the aforementioned implementations. The module(s) in this embodiment have the same functions or perform the same steps, which will not be repeated here. However, those skilled in the art should know that the text descriptions corresponding to FIGS. 4 to 16 may be introduced into the embodiments and correspond to the module(s) in the communication device 1800.

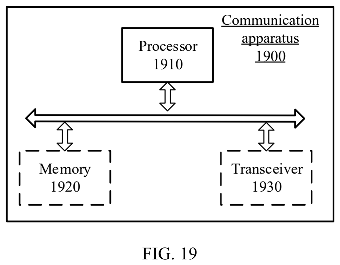

FIG. 19 is a schematic structural diagram of a communication apparatus provided in the embodiments of the present disclosure. The dashed lines in FIG. 19 indicate that units or modules are optional. The apparatus 1900 may be used to implement the method described in the above method embodiments. The apparatus 1900 may be a chip or a communication device.

The apparatus 1900 may include one or more processors 1910. The processor 1910 may support the apparatus 1900 to implement the method described in the above method embodiments. The processor 1910 may be a general-purpose processor or a specific-purpose processor. For example, the processor may be a central processing unit (CPU). Alternatively, the processor may be any of other general-purpose processors, a digital signal processor (DSP), an application specific integrated circuit (ASIC), a field programmable gate array (FPGA) or any of other programmable logic devices, a discrete gate or transistor logic device, a discrete hardware component, or the like. The general-purpose processor may be a microprocessor, or the processor may be any conventional processor or the like.

The apparatus 1900 may further include one or more memories 1920. The memory 1920 has stored thereon a program. The program can be executed by the processor 1910, to enable the processor 1910 to perform the method described in the above method embodiments. The memory 1920 may be independent from the processor 1910 or may be integrated into the processor 1910.

The apparatus 1900 may further include a transceiver 1930. The processor 1910 may communicate with other devices or chips through the transceiver 1930. For example, the processor 1910 may transmit and receive data with other devices or chips through the transceiver 1930.

The embodiments of the present disclosure further provide a computer-readable storage medium to store a program. The computer-readable storage medium may be applied to the communication device provided in the embodiments of the present disclosure, and the program enables a computer to perform the method performed by the communication device in various embodiments of the present disclosure.

The embodiments of the present disclosure further provide a computer program product. The computer program product includes a program. The computer program product may be applied to the communication device provided in the embodiments of the present disclosure, and the program enables a computer to perform the method performed by the communication device in various embodiments of the present disclosure.

The embodiments of the present disclosure further provide a computer program. The computer program may be applied to the communication device provided in the embodiments of the present disclosure, and the computer program enables a computer to perform the method performed by the communication device in various embodiments of the present disclosure.

It should be understood that the terms "system" and "network" may be used interchangeably in the present disclosure. In addition, the terms used in the present disclosure are only for the purpose of explaining specific embodiments of the present disclosure, but are not intended to limit the present disclosure. The terms "first," "second," "third," "fourth," etc., in the specification, claims and drawings of the present disclosure are used to distinguish different objects, rather than to describe a specific order. In addition, the terms "comprise/include," "have" and any variations thereof, are intended to cover non-exclusive inclusions.

In the embodiments of the present disclosure, the term "field" may also be referred to as a "field", a "subfield" or a "sub-field". A field may occupy one or more bytes/ octets, or a field may occupy one or more bits.

In the embodiments of the present disclosure, the "indicate" mentioned may mean a direct indication, or may mean that there is an indirect indication relationship. For example, A indicating B may mean that A directly indicates B, for example, B may be acquired by A; alternatively, A indicating B may mean that A indirectly indicates B, for example, A indicates C, and B may be acquired by C; alternatively, A indicating B may mean that there is an association relationship between A and B.

In the embodiments of the present disclosure, "B corresponding to A" means that B is associated with A, and B may be determined based on A. However, it should further be understood that B being determined based on A does not mean that B is determined based only on A, but also means that B is determined based on A and/or other information.

In the embodiments of the present disclosure, the term "correspond" may mean that there is a direct or indirect correspondence between the two, or may mean that there is an association relationship between the two, or may mean a relationship of indicating and being indicated, a relationship of configuring and being configured, or the like.

In the embodiments of the present disclosure, "pre-defined" or "pre-configured" may be implemented by pre-saving corresponding codes, tables, or other manners capable of being used to indicate related information in a device (e.g., including an AP and a STA), and the specific implementation thereof is not limited in the present disclosure. For example, "pre-defined" may refer to being defined in a protocol.

In the embodiments of the present disclosure, the term "and/or" is only an association to describe associated objects, which indicates that there may be three kinds of relationships. For example, "A and/or B" may represent three cases in which: A exists alone, both A and B exist, and B exists alone. In addition, the character "/" herein generally indicates that associated objects before and after the character "/" are in an "or" relationship.

In the embodiments of the present disclosure, the term "include" may refer to direct inclusion or indirect inclusion. Optionally, the term "include" mentioned in the embodiments of the present disclosure may be replaced with "indicate" or "be used for determining". For example, "A includes B" may be replaced by "A indicates B", or "A is used for determining B".

In various embodiments of the present disclosure, the sequence numbers of the above processes do not imply the order of execution. The order of execution of each process should be determined by its function and internal logic, and should not constitute any limitation on the implementation process of the embodiments of the present disclosure.

In the embodiments of the present disclosure, the "protocol" may refer to a standard protocol in the communication field, for example, the "protocol" may include a Wi-Fi protocol and a related protocol used in future Wi-Fi communication system, which is not limited in the present disclosure.

In several embodiments provided in the present disclosure, it should be understood that the disclosed systems, devices/apparatuses and methods may be implemented in other ways. For example, the device/apparatus embodiments described above are only illustrative. For example, the division of units is only a logical function division. There may be other division manners in practical implementation. For example, multiple units or components may be combined or integrated into another system, or some features may be ignored or not executed. Another point is that the mutual coupling or direct coupling or communication connection shown or discussed may be indirect coupling or communication connection through some interfaces, devices, or units, which may be electrical, mechanical, or other forms.

The units described as separate components may or may not be physically separated, and the components shown as units may or may not be physical units, that is, these components may be located in one place or distributed over multiple network units. Some or all of the units may be selected according to actual needs to achieve the purpose of the solutions of the embodiments.

In addition, functional units in various embodiments of the present disclosure may be integrated into one processing unit, or may physically exist separately, or two or more units may be integrated into one unit.

In the above embodiments, functional units may be fully or partially implemented through software, hardware, firmware or any combination thereof. When implemented using software, the units may be fully or partially implemented in the form of a computer program product. The computer program product includes one or more computer instructions. When loading and executing the computer program instructions in a computer, all or part of the processes or functions described in the embodiments of the present disclosure are generated. The computer may be a general-purpose computer, a dedicated computer, a computer network, or any of other programmable devices. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center via wired (e.g., coaxial cable, optical fiber, digital subscriber line (DSL)) or wireless (e.g., infrared, radio, microwave) manners. The computer-readable storage medium may be any available medium that can be read by a computer or a data storage device such as a server or a data center that includes one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)).

The above only describes specific implementation of the present disclosure, but the scope of protection of the present disclosure is not limited thereto. Any skilled person familiar with the technical field can easily conceive changes or replacements within the technical scope disclosed by the present disclosure. These changes or replacements should be covered in the scope of protection of the present disclosure. Therefore, the scope of protection of the present disclosure shall be subject to the scope of protection of the appended claims.

**Claims**

1. A method for wireless communication, comprising: transmitting, by a first device, a first frame to a second device based on interference information, wherein the first frame is used for indicating interference coordination operation information of one or more links and/or one or more sub-channels/operating frequency bands.

2. The method according to claim 1, wherein the interference coordination operation information is used for instructing an interfered sub-channel/operating frequency band of an interfered device to not operate during unavailable time, and the unavailable time is determined based on the interference information.

3. The method according to claim 2, wherein the unavailable time is comprised in or not comprised within a first reserved service period, the first reserved service period is determined based on interference time, and a non-interfered sub-channel/operating frequency band of the interfered device operates within the first reserved service period.

4. The method according to claim 2 or 3, wherein the first frame comprises first information, and the first information is used for indicating the unavailable time of the interfered sub-channel/operating frequency band.

5. The method according to claim 4, wherein the first information comprises one or more of following types of information:

   a link identity (ID) to which the interfered sub-channel/operating frequency band and/or the non-interfered sub-channel/operating frequency band belong;
   an ID of the interfered sub-channel/operating frequency band and/or the non-interfered sub-channel/operating frequency band;
   an operating frequency band of the interfered sub-channel/operating frequency band and/or the non-interfered sub-channel/operating frequency band;
   a type of interference;
   a time slot of the unavailable time;
   whether the interfered sub-channel/operating frequency band and/or the non-interfered sub-channel/operating frequency band is a master channel; or
   a minimum time slot unit.

6. The method according to any one of claims 2 to 5, wherein the first frame performs indicating based on a negotiation process of a first reserved service period.

7. The method according to claim 6, wherein the first frame carries a first element, and the first element is used for negotiating the first reserved service period.

8. The method according to claim 1, wherein the interference coordination operation information is used for instructing all or part of transmission resources or reception resources on an interfered link to be transferred to a non-interfered link, and the interfered link and the non-interfered link are determined based on the interference information.

9. The method according to claim 8, wherein the first frame comprises second information, and the second information is used for indicating a distribution of a number of spatial streams on the interfered link and on the non-interfered link.

10. The method according to claim 9, wherein the distribution of the number of the spatial streams is: that a number of spatial streams on the interfered link is 0, and a number of spatial streams on the non-interfered link is m+n, m being an initial number of spatial streams on the interfered link, and n being an initial number of spatial streams on the non-interfered link.

11. The method according to claim 9, wherein the distribution of the number of the spatial streams is: that a number of spatial streams on the interfered link is 1, and a number of spatial streams on the non-interfered link is m+n-1, m being an initial number of spatial streams on the interfered link, n being an initial number of spatial streams on the non-interfered link, and one spatial stream on the interfered link is used for channel monitoring.

12. The method according to any one of claims 9 to 11, wherein the second information comprises one or more of following types of information of each link:

> a link ID;
> a number of available spatial streams (NSS);
> a link operating frequency band;
> spatial stream handover time;
> a maximum NSS limit;
> a maximum modulation and coding (MCS) limit; or
> a maximum protocol data unit (PPDU) size limit.

13. The method according to any one of claims 8 to 12, wherein an initial state of the distribution of the number of the spatial streams is restored based on timing end of a first timer, and a timing duration of the first timer is determined by the first device.

14. The method according to claim 13, wherein a start time of the first timer is determined based on time when the first device receives a response frame of the first frame.

15. The method according to any one of claims 8 to 12, further comprising:
transmitting, by the first device, a second frame to the second device, wherein the second frame is used for indicating restoration of an initial state of the distribution of the number of the spatial streams.

16. The method according to claim 15, wherein the second frame is a first link-indicator frame.

17. The method according to any one of claims 8 to 16, wherein the first frame is a first link-indicator frame or a first multi-user request to send (MU-RTS) frame.

18. The method according to claim 1, wherein the interference coordination operation information is used for instructing an interfered device to perform, in synchronization with an interference system, transmission and reception on an interfered link, or the interfered device to not operate on the interfered link in response to that the interference system performs transmission and reception.

19. The method according to claim 18, wherein the first frame comprises third information, the third information is used for indicating an uplink/downlink transmission rhythm of the interfered link within a first reserved service period, and the first reserved service period is determined based on time when the first device or the second device transmits data in the interference system.

20. The method according to claim 19, wherein the uplink/downlink transmission rhythm is:
that on the interfered link, the interfered device performs uplink transmission within the first reserved service period.

21. The method according to claim 20, wherein the uplink/downlink transmission rhythm is applicable to the interfered device in an active mode.

22. The method according to claim 19, wherein the uplink/downlink transmission rhythm is:
that on the interfered link, the interfered device distinguishes between uplink transmission and downlink transmission within different first reserved service periods.

23. The method according to claim 19, wherein the uplink/downlink transmission rhythm is:
that on the interfered link, the interfered device first performs uplink transmission and then performs downlink transmission within the first reserved service period.

24. The method according to claim 22 or 23, wherein the uplink/downlink transmission rhythm is applicable to the interfered device in a power save mode.

25. The method according to any one of claims 19 to 24, wherein the third information comprises one or more of following types of information of the interfered link within the first reserved service period:

> a minimum time slot unit;
> a ratio between uplink time slot and downlink time slot;

an uplink/downlink indication; or

a reverse direction operation indication, used for indicating whether to change transmission direction within the first reserved service period.

26. The method according to any one of claims 18 to 25, wherein the first frame performs indicating based on a negotiation process of a first reserved service period.

27. The method according to claim 26, wherein the first frame carries a first element, and the first element is used for negotiating the first reserved service period.

28. The method according to any one of claims 19 to 27, further comprising:

within the first reserved service period, indicating dynamically, by the first device, an uplink/downlink transmission direction and/or a ratio between uplink transmission and downlink transmission to the second device.

29. The method according to any one of claims 19 to 28, wherein the interfered link is synchronized with the interference system at a time slot end point of a last time slot within the first reserved service period.

30. The method according to any one of claims 19 to 29, wherein the uplink/downlink transmission rhythm does not affect channel monitoring capability within the first reserved service period.

31. The method according to claim 7 or 30, further comprising:

within the first reserved service period, indicating, by the first device, related information of a next first reserved service period to the second device.

32. The method according to claim 31, wherein a management frame for establishing the first reserved service period comprises a first mode field, and the first mode field is used for indicating that an operating mode of the first reserved service period is an explicit operating mode or an implicit operating mode.

33. The method according to any one of claims 1 to 32, wherein the interference information comprises one or more of following types of information at a sub-channel/operating frequency band level:

an indication of whether a sub-channel/operating frequency band is interfered;
a type of interference;
start time of interference;
an operating frequency band of an interference system;
uplink and downlink transmission time of the interference system;
total transmission time of the interference system;
a minimum time slot unit of the interference system; or
related information of periodicity interference.

34. The method according to claim 33, wherein the interference information is reported by the second device.

35. The method according to claim 34, wherein the interference information is carried in a first interference information frame.

36. The method according to claim 35, wherein the first interference information frame comprises a plurality of interference information subfields, and each of the interference information subfields is used for carrying interference information of one sub-channel/operating frequency band.

37. The method according to any one of claims 34 to 36, wherein reporting of the interference information is triggered based on a third frame of the first device, and the third frame is used for instructing one or more second devices to report the interference information.

38. The method according to claim 37, wherein the third frame is a first interference information trigger frame, the first interference information trigger frame comprises a first request field, and the first request field is used for indicating whether to request to report the interference information.

39. The method according to any one of claims 1 to 38, wherein the first device is a non-access point station device, and the second device is an access point device.

40. The method according to any one of claims 1 to 39, wherein the first device is an access point device, and the second device is a non-access point station device.

41. The method according to any one of claims 1 to 40, wherein the first reserved service period is a target wake time service period (TWT SP) or a non-triggered restricted target wake time service period (R-TWT SP).

42. The method according to any one of claims 1 to 41, wherein the interference information is interference information of a co-located-device system.

43. A method for wireless communication, comprising:
receiving, by a second device, a first frame transmitted by a first device based on interference information, wherein the first frame is used for indicating interference coordination operation information of one or more links and/or one or more sub-channels/operating frequency bands.

44. The method according to claim 43, wherein the interference coordination operation information is used for instructing an interfered sub-channel/operating frequency band of an interfered device to not operate during unavailable time, and the unavailable time is determined based on the interference information.

45. The method according to claim 44, wherein the unavailable time is comprised in or not comprised within a first reserved service period, the first reserved service period is determined based on interference time, and a non-interfered sub-channel/operating frequency band of the interfered device operates within the first reserved service period.

46. The method according to claim 44 or 45, wherein the first frame comprises first information, and the first information is used for indicating the unavailable time of the interfered sub-channel/operating frequency band.

47. The method according to claim 46, wherein the first information comprises one or more of following types of information:

a link identity (ID) to which the interfered sub-channel/operating frequency band and/or the non-interfered sub-channel/operating frequency band belong;
an ID of the interfered sub-channel/operating frequency band and/or the non-interfered sub-channel/operating frequency band;
an operating frequency band of the interfered sub-channel/operating frequency band and/or the non-interfered sub-channel/operating frequency band;
a type of interference;
a time slot of the unavailable time;
whether the interfered sub-channel/operating frequency band and/or the non-interfered sub-channel/operating frequency band is a master channel; or
a minimum time slot unit.

48. The method according to any one of claims 44 to 47, wherein the first frame performs indicating based on a negotiation process of a first reserved service period.

49. The method according to claim 48, wherein the first frame carries a first element, and the first element is used for negotiating the first reserved service period.

50. The method according to claim 43, wherein the interference coordination operation information is used for instructing all or part of transmission resources or reception resources on an interfered link to be transferred to a non-interfered link, and the interfered link and the non-interfered link are determined based on the interference information.

51. The method according to claim 50, wherein the first frame comprises second information, and the second information is used for indicating a distribution of a number of spatial streams on the interfered link and on the non-interfered link.

52. The method according to claim 51, wherein the distribution of the number of the spatial streams is: that a number of spatial streams on the interfered link is 0, and a number of spatial streams on the non-interfered link is m+n, m being an initial number of spatial streams on the interfered link, and n being an initial number of spatial streams on the non-interfered link.

53. The method according to claim 51, wherein the distribution of the number of the spatial streams is: that a number of spatial streams on the interfered link is 1, and a number of spatial streams on the non-interfered link is m+n-1, m being an initial number of spatial streams on the interfered link, n being an initial number of spatial streams on the non-interfered link, and one spatial stream on the interfered link is used for channel monitoring.

54. The method according to any one of claims 51 to 53, wherein the second information comprises one or more of following types of information of each link:

a link ID;
a number of available spatial streams (NSS);
a link operating frequency band;
spatial stream handover time;
a maximum NSS limit;
a maximum modulation and coding (MCS) limit; or
a maximum protocol data unit (PPDU) size limit.

55. The method according to any one of claims 50 to 54, wherein an initial state of the distribution of the number of the spatial streams is restored based on timing end of a first timer, and a timing duration of the first timer is determined by the first device.

56. The method according to claim 55, wherein a start time of the first timer is determined based on time when the first device receives a response frame of the first frame.

**57.** The method according to any one of claims 50 to 54, further comprising:

receiving, by the second device, a second frame transmitted by the first device, wherein the second frame is used for indicating restoration of an initial state of the distribution of the number of the spatial streams.

**58.** The method according to claim 57, wherein the second frame is a first link-indicator frame.

**59.** The method according to any one of claims 50 to 58, wherein the first frame is a first link-indicator frame or a first multi-user request to send (MU-RTS) frame.

**60.** The method according to claim 43, wherein the interference coordination operation information is used for instructing an interfered device to perform, in synchronization with an interference system, transmission and reception on an interfered link, or the interfered device to not operate on the interfered link in response to that the interference system performs transmission and reception.

**61.** The method according to claim 60, wherein the first frame comprises third information, the third information is used for indicating an uplink/downlink transmission rhythm of the interfered link within a first reserved service period, and the first reserved service period is determined based on time when the first device or the second device transmits data in the interference system.

**62.** The method according to claim 61, wherein the uplink/downlink transmission rhythm is:

that on the interfered link, the interfered device performs uplink transmission within the first reserved service period.

**63.** The method according to claim 62, wherein the uplink/downlink transmission rhythm is applicable to the interfered device in an active mode.

**64.** The method according to claim 61, wherein the uplink/downlink transmission rhythm is:

that on the interfered link, the interfered device distinguishes between uplink transmission and downlink transmission within different first reserved service periods.

**65.** The method according to claim 61, wherein the uplink/downlink transmission rhythm is:

that on the interfered link, the interfered device first performs uplink transmission and then performs downlink transmission within the first reserved service period.

**66.** The method according to claim 64 or 65, wherein the uplink/downlink transmission rhythm is applicable to the interfered device in a power save mode.

**67.** The method according to any one of claims 61 to 66, wherein the third information comprises one or more of following types of information of the interfered link within the first reserved service period:

a minimum time slot unit;
a ratio between uplink time slot and downlink time slot;
an uplink/downlink indication; or
a reverse direction operation indication, used for indicating whether to change transmission direction within the first reserved service period.

**68.** The method according to any one of claims 60 to 67, wherein the first frame performs indicating based on a negotiation process of a first reserved service period.

**69.** The method according to claim 68, wherein the first frame carries a first element, and the first element is used for negotiating the first reserved service period.

**70.** The method according to any one of claims 61 to 69, further comprising:

within the first reserved service period, receiving, by the second device, an uplink/downlink transmission direction and/or a ratio between uplink transmission and downlink transmission indicated dynamically by the first device.

**71.** The method according to any one of claims 61 to 70, wherein the interfered link is synchronized with the interference system at a time slot end point of a last time slot within the first reserved service period.

**72.** The method according to any one of claims 61 to 71, wherein the uplink/downlink transmission rhythm does not affect channel monitoring capability within the first reserved service period.

**73.** The method according to claim 49 or 72, further comprising:

within the first reserved service period, receiving, by the second device, related information of a next first reserved service period indicated by the first device.

**74.** The method according to claim 73, wherein a management frame for establishing the first reserved service period comprises a first mode field, and the first mode field is used for indicating that an operating mode of the first reserved service period is an explicit operating mode or an implicit operating mode.

**75.** The method according to any one of claims 43 to 74, wherein the interference information comprises one or more of following types of information at a sub-channel/operating frequency band level:

an indication of whether a sub-channel/operating frequency band is interfered;
a type of interference;
start time of interference;
an operating frequency band of an interference system;
uplink and downlink transmission time of the interference system;
total transmission time of the interference system;
a minimum time slot unit of the interference system; or
related information of periodicity interference.

76. The method according to claim 75, wherein the interference information is reported by the second device.

77. The method according to claim 76, wherein the interference information is carried in a first interference information frame.

78. The method according to claim 77, wherein the first interference information frame comprises a plurality of interference information subfields, and each of the interference information subfields is used for carrying interference information of one sub-channel/operating frequency band.

79. The method according to any one of claims 76 to 78, wherein reporting of the interference information is triggered based on a third frame of the first device, and the third frame is used for instructing one or more second devices to report the interference information.

80. The method according to claim 79, wherein the third frame is a first interference information trigger frame, the first interference information trigger frame comprises a first request field, and the first request field is used for indicating whether to request to report the interference information.

81. The method according to any one of claims 43 to 80, wherein the first device is a non-access point station device, and the second device is an access point device.

82. The method according to any one of claims 43 to 81, wherein the first device is an access point device and the second device is a non-access point station device.

83. The method according to any one of claims 43 to 82, wherein the first reserved service period is a target wake time service period (TWT SP) or a non-triggered restricted target wake time service period (R-TWT SP).

84. The method according to any one of claims 43 to 83, wherein the interference information is interference information of a co-located-device system.

85. A communication device, being a first device and comprising:
a transmitting module, configured to transmit a first frame to a second device based on interference information, wherein the first frame is used for indicating interference coordination operation information of one or more links and/or one or more sub-channels/operating frequency bands.

86. The communication device according to claim 85, wherein the interference coordination operation information is used for instructing an interfered sub-channel/operating frequency band of an interfered device to not operate during unavailable time, and the unavailable time is determined based on the interference information.

87. The communication device according to claim 86, wherein the unavailable time is comprised in or not comprised within a first reserved service period, the first reserved service period is determined based on interference time, and a non-interfered sub-channel/operating frequency band of the interfered device operates within the first reserved service period.

88. The communication device according to claim 86 or 87, wherein the first frame comprises first information, and the first information is used for indicating the unavailable time of the interfered sub-channel/operating frequency band.

89. The communication device according to claim 88, wherein the first information comprises one or more of following types of information:

a link identity (ID) to which the interfered sub-channel/operating frequency band and/or the non-interfered sub-channel/operating frequency band belong;
an ID of the interfered sub-channel/operating frequency band and/or the non-interfered sub-channel/operating frequency band;
an operating frequency band of the interfered sub-channel/operating frequency band and/or the non-interfered sub-channel/operating frequency band;
a type of interference;
a time slot of the unavailable time;
whether the interfered sub-channel/operating frequency band and/or the non-interfered sub-channel/operating frequency band is a master channel; or

a minimum time slot unit.

90. The communication device according to any one of claims 86 to 89, wherein the first frame performs indicating based on a negotiation process of a first reserved service period.

91. The communication device according to claim 90, wherein the first frame carries a first element, and the first element is used for negotiating the first reserved service period.

92. The communication device according to claim 85, wherein the interference coordination operation information is used for instructing all or part of transmission resources or reception resources on an interfered link to be transferred to a non-interfered link, and the interfered link and the non-interfered link are determined based on the interference information.

93. The communication device according to claim 92, wherein the first frame comprises second information, and the second information is used for indicating a distribution of a number of spatial streams on the interfered link and on the non-interfered link.

94. The communication device according to claim 93, wherein the distribution of the number of the spatial streams is:

that a number of spatial streams on the interfered link is 0, and a number of spatial streams on the non-interfered link is m+n, m being an initial number of spatial streams on the interfered link, and n being an initial number of spatial streams on the non-interfered link.

95. The communication device according to claim 93, wherein the distribution of the number of the spatial streams is:

that a number of spatial streams on the interfered link is 1, and a number of spatial streams on the non-interfered link is m+n-1, m being an initial number of spatial streams on the interfered link, n being an initial number of spatial streams on the non-interfered link, and one spatial stream on the interfered link is used for channel monitoring.

96. The communication device according to any one of claims 93 to 95, wherein the second information comprises one or more of following types of information of each link:

a link ID;
a number of available spatial streams (NSS);

a link operating frequency band;
spatial stream handover time;
a maximum NSS limit;
a maximum modulation and coding (MCS) limit; or
a maximum protocol data unit (PPDU) size limit.

97. The communication device according to any one of claims 92 to 96, wherein an initial state of the distribution of the number of the spatial streams is restored based on timing end of a first timer, and a timing duration of the first timer is determined by the first device.

98. The communication device according to claim 97, wherein a start time of the first timer is determined based on time when the first device receives a response frame of the first frame.

99. The communication device according to any one of claims 92 to 96, wherein the transmitting module is further configured to:

transmit a second frame to the second device, wherein the second frame is used for indicating restoration of an initial state of the distribution of the number of the spatial streams.

100. The communication device according to claim 99, wherein the second frame is a first link-indicator frame.

101. The communication device according to any one of claims 92 to 100, wherein the first frame is a first link-indicator frame or a first multi-user request to send (MU-RTS) frame.

102. The communication device according to claim 85, wherein the interference coordination operation information is used for instructing an interfered device to perform, in synchronization with an interference system, transmission and reception on an interfered link, or the interfered device to not operate on the interfered link in response to that the interference system performs transmission and reception.

103. The communication device according to claim 102, wherein the first frame comprises third information, the third information is used for indicating an uplink/downlink transmission rhythm of the interfered link within a first reserved service period, and the first reserved service period is determined based on time when the first device or the second device transmits data in the interference system.

104.

The communication device according to claim 103, wherein the uplink/downlink transmission rhythm is: that on the interfered link, the interfered device performs uplink transmission within the first reserved service period.

**105.**

The communication device according to claim 104, wherein the uplink/downlink transmission rhythm is applicable to the interfered device in an active mode.

**106.**

The communication device according to claim 103, wherein the uplink/downlink transmission rhythm is: that on the interfered link, the interfered device distinguishes between uplink transmission and downlink transmission within different first reserved service periods.

**107.**

The communication device according to claim 103, wherein the uplink/downlink transmission rhythm is: that on the interfered link, the interfered device first performs uplink transmission and then performs downlink transmission within the first reserved service period.

**108.**

The communication device according to claim 106 or 107, wherein the uplink/downlink transmission rhythm is applicable to the interfered device in a power save mode.

**109.**

The communication device according to any one of claims 103 to 108, wherein the third information comprises one or more of following types of information of the interfered link within the first reserved service period:

> a minimum time slot unit;
> a ratio between uplink time slot and downlink time slot;
> an uplink/downlink indication; or
> a reverse direction operation indication, used for indicating whether to change transmission direction within the first reserved service period.

**110.**

The communication device according to any one of claims 102 to 109, wherein the first frame performs indicating based on a negotiation process of a first reserved service period.

**111.** The communication device according to claim 110, wherein the first frame carries a first element, and the first element is used for negotiating the first reserved service period.

**112.**

The communication device according to any one of claims 103 to 111, wherein the transmitting module is further configured to: within the first reserved service period, indicate dynamically, an uplink/downlink transmission direction and/or a ratio between uplink transmission and downlink transmission to the second device.

**113.**

The communication device according to any one of claims 103 to 112, wherein the interfered link is synchronized with the interference system at a time slot end point of a last time slot within the first reserved service period.

**114.**

The communication device according to any one of claims 103 to 113, wherein the uplink/downlink transmission rhythm does not affect channel monitoring capability within the first reserved service period.

**115.**

The communication device according to claim 91 or 114, wherein the transmitting module is further configured to: within the first reserved service period, indicate related information of a next first reserved service period to the second device.

**116.**

The communication device according to claim 115, wherein a management frame for establishing the first reserved service period comprises a first mode field, and the first mode field is used for indicating that an operating mode of the first reserved service period is an explicit operating mode or an implicit operating mode.

**117.**

The communication device according to any one of claims 85 to 116, wherein the interference information comprises one or more of following types of information at a sub-channel/operating frequency band level:

> an indication of whether a sub-channel/operating frequency band is interfered;
> a type of interference;
> start time of interference;
> an operating frequency band of an interference system;
> uplink and downlink transmission time of the interference system;
> total transmission time of the interference system;
> a minimum time slot unit of the interference system; or
> related information of periodicity interference.

**118.**

The communication device according to claim 117, wherein the interference information is reported by the second device.

**119.**

The communication device according to claim 118, wherein the interference information is carried in a first interference information frame.

**120.**

The communication device according to claim 119, wherein the first interference information frame comprises a plurality of interference information subfields, and each of the interference information subfields is used for carrying interference information of one sub-channel/operating frequency band.

**121.**

The communication device according to any one of claims 118 to 120, wherein reporting of the interference information is triggered based on a third frame of the first device, and the third frame is used for instructing one or more second devices to report the interference information.

**122.**

The communication device according to claim 121, wherein the third frame is a first interference information trigger frame, the first interference information trigger frame comprises a first request field, and the first request field is used for indicating whether to request to report the interference information.

**123.**

The communication device according to any one of claims 85 to 122, wherein the first device is a non-access point station device, and the second device is an access point device.

**124.**

The communication device according to any one of claims 85 to 123, wherein the first device is an access point device and the second device is a non-access point station device.

**125.**

The communication device according to any one of claims 85 to 124, wherein the first reserved service period is a target wake time service period (TWT SP) or a non-triggered restricted target wake time service period (R-TWT SP).

**126.**

The communication device according to any one of claims 85 to 125, wherein the interference information is interference information of a co-located-device system.

**127.**

A communication device, being a second device and comprising:

a receiving module, configured to receive a first frame transmitted by a first device based on interference information, wherein the first frame is used for indicating interference coordination operation information of one or more links and/or one or more sub-channels/operating frequency bands.

**128.**

The communication device according to claim 127, wherein the interference coordination operation information is used for instructing an interfered sub-channel/operating frequency band of an interfered device to not operate during unavailable time, and the unavailable time is determined based on the interference information.

**129.**

The communication device according to claim 128, wherein the unavailable time is comprised in or not comprised within a first reserved service period, the first reserved service period is determined based on interference time, and a non-interfered sub-channel/operating frequency band of the interfered device operates within the first reserved service period.

**130.**

The communication device according to claim 128 or 129, wherein the first frame comprises first information, and the first information is used for indicating the unavailable time of the interfered sub-channel/operating frequency band.

**131.**

The communication device according to claim 130, wherein the first information comprises one or more of following types of information:

a link identity (ID) to which the interfered sub-channel/operating frequency band and/or the non-interfered sub-channel/operating frequency band belong;
an ID of the interfered sub-channel/operating frequency band and/or the non-interfered sub-channel/operating frequency band;
an operating frequency band of the interfered sub-channel/operating frequency band and/or the non-interfered sub-channel/operating frequency band;
a type of interference;
a time slot of the unavailable time;
whether the interfered sub-channel/operating frequency band and/or the non-interfered sub-channel/operating frequency band is a master channel; or
a minimum time slot unit.

**132.**

The communication device according to any one of claims 128 to 131, wherein the first frame performs indicating based on a negotiation process of a first reserved service period.

**133.**
The communication device according to claim 132, wherein the first frame carries a first element, and the first element is used for negotiating the first reserved service period.

**134.**
The communication device according to claim 127, wherein the interference coordination operation information is used for instructing all or part of transmission resources or reception resources on an interfered link to be transferred to a non-interfered link, and the interfered link and the non-interfered link are determined based on the interference information.

**135.**
The communication device according to claim 134, wherein the first frame comprises second information, and the second information is used for indicating a distribution of a number of spatial streams on the interfered link and on the non-interfered link.

**136.**
The communication device according to claim 135, wherein the distribution of the number of the spatial streams is:
that a number of spatial streams on the interfered link is 0, and a number of spatial streams on the non-interfered link is m+n, m being an initial number of spatial streams on the interfered link, and n being an initial number of spatial streams on the non-interfered link.

**137.**
The communication device according to claim 135, wherein the distribution of the number of the spatial streams is:
that a number of spatial streams on the interfered link is 1, and a number of spatial streams on the non-interfered link is m+n-1, m being an initial number of spatial streams on the interfered link, n being an initial number of spatial streams on the non-interfered link, and one spatial stream on the interfered link is used for channel monitoring.

**138.**
The communication device according to any one of claims 135 to 137, wherein the second information comprises one or more of following types of information of each link:

    a link ID;
    a number of available spatial streams (NSS);
    a link operating frequency band;
    spatial stream handover time;

    a maximum NSS limit;
    a maximum modulation and coding (MCS) limit; or
    a maximum protocol data unit (PPDU) size limit.

**139.**
The communication device according to any one of claims 134 to 138, wherein an initial state of the distribution of the number of the spatial streams is restored based on timing end of a first timer, and a timing duration of the first timer is determined by the first device.

**140.**
The communication device according to claim 139, wherein a start time of the first timer is determined based on time when the first device receives a response frame of the first frame.

**141.**
The communication device according to any one of claims 134 to 138, further comprising:
a first receiving module, configured to receive a second frame transmitted by the first device, wherein the second frame is used for indicating restoration of an initial state of the distribution of the number of the spatial streams.

**142.**
The communication device according to claim 141, wherein the second frame is a first link-indicator frame.

**143.**
The communication device according to any one of claims 134 to 142, wherein the first frame is a first link-indicator frame or a first multi-user request to send (MU-RTS) frame.

**144.**
The communication device according to claim 127, wherein the interference coordination operation information is used for instructing an interfered device to perform, in synchronization with an interference system, transmission and reception on an interfered link, or the interfered device to not operate on the interfered link in response to that the interference system performs transmission and reception.

**145.**
The communication device according to claim 144, wherein the first frame comprises third information, the third information is used for indicating an uplink/downlink transmission rhythm of the interfered link within a first reserved service period, and the first reserved service period is determined based on time when the first device or the second device transmits data in the interference system.

**146.**
The communication device according to claim 145, wherein the uplink/downlink transmission rhythm is:
that on the interfered link, the interfered device performs uplink transmission within the first reserved service period.

**147.**

The communication device according to claim 146, wherein the uplink/downlink transmission rhythm is applicable to the interfered device in an active mode.

**148.**

The communication device according to claim 145, wherein the uplink/downlink transmission rhythm is:
that on the interfered link, the interfered device distinguishes between uplink transmission and downlink transmission within different first reserved service periods.

**149.**

The communication device according to claim 145, wherein the uplink/downlink transmission rhythm is:
that on the interfered link, the interfered device first performs uplink transmission and then performs downlink transmission within the first reserved service period.

**150.**

The communication device according to claim 148 or 149, wherein the uplink/downlink transmission rhythm is applicable to the interfered device in a power save mode.

**151.**

The communication device according to any one of claims 145 to 150, wherein the third information comprises one or more of following types of information of the interfered link within the first reserved service period:

  a minimum time slot unit;
  a ratio between uplink time slot and downlink time slot;
  an uplink/downlink indication; or
  a reverse direction operation indication, used for indicating whether to change transmission direction within the first reserved service period.

**152.**

The communication device according to any one of claims 144 to 151, wherein the first frame performs indicating based on a negotiation process of a first reserved service period.

**153.**

The communication device according to claim 152, wherein the first frame carries a first element, and the first element is used for negotiating the first reserved service period.

**154.**

The communication device according to any one of claims 145 to 153, further comprising:
a second receiving module, configured to, within the first reserved service period, receive an uplink/downlink transmission direction and/or a ratio between uplink transmission and downlink transmission indicated dynamically by the first device.

**155.**

The communication device according to any one of claims 145 to 154, wherein the interfered link is synchronized with the interference system at a time slot end point of a last time slot within the first reserved service period.

**156.**

The communication device according to any one of claims 145 to 155, wherein the uplink/downlink transmission rhythm does not affect channel monitoring capability within the first reserved service period.

**157.**

The communication device according to claim 133 or 156, further comprising:
a third receiving module, configured to, within the first reserved service period, receive related information of a next first reserved service period indicated by the first device.

**158.**

The communication device according to claim 157, wherein a management frame for establishing the first reserved service period comprises a first mode field, and the first mode field is used for indicating that an operating mode of the first reserved service period is an explicit operating mode or an implicit operating mode.

**159.**

The communication device according to any one of claims 127 to 158, wherein the interference information comprises one or more of following types of information at a sub-channel/operating frequency band level:

  an indication of whether a sub-channel/operating frequency band is interfered;
  a type of interference;
  start time of interference;
  an operating frequency band of an interference system;
  uplink and downlink transmission time of the interference system;
  total transmission time of the interference system;
  a minimum time slot unit of the interference system; or
  related information of periodicity interference.

**160.**

The communication device according to claim 159, wherein the interference information is reported by the second device.

**161.**

The communication device according to claim 160, wherein the interference information is carried in a first interference information frame.

**162.**

The communication device according to claim 161, wherein the first interference information frame comprises a plurality of interference information subfields, and each of the interference information subfields is used for carrying interference information of one sub-channel/operating frequency band.

**163.**

The communication device according to any one of claims 160 to 162, wherein reporting of the interference information is triggered based on a third frame of the first device, and the third frame is used for instructing one or more second devices to report the interference information.

**164.**

The communication device according to claim 163, wherein the third frame is a first interference information trigger frame, the first interference information trigger frame comprises a first request field, and the first request field is used for indicating whether to request to report the interference information.

**165.**

The communication device according to any one of claims 127 to 164, wherein the first device is a non-access point station device, and the second device is an access point device.

**166.**

The communication device according to any one of claims 127 to 165, wherein the first device is an access point device and the second device is a non-access point station device.

**167.**

The communication device according to any one of claims 127 to 166, wherein the first reserved service period is a target wake time service period (TWT SP) or a non-triggered restricted target wake time service period (R-TWT SP).

**168.**

The communication device according to any one of claims 127 to 167, wherein the interference information is interference information of a co-located-device system.

**169.**

A communication device, comprising a memory and a processor, wherein the memory is configured to store a program, and the processor is configured to call the program in the memory, to enable the communication device to perform the method according to any one of claims 1 to 42.

**170.**

A communication device, comprising a memory and a processor, wherein the memory is configured to store a program, and the processor is configured to call the program in the memory, to enable the communication device to perform the method according to any one of claims 43 to 84.

**171.**

An apparatus, comprising a processor configured to call a program from a memory, to enable the apparatus to perform the method according to any one of claims 1 to 42 or 43 to 84.

**172.**

A chip, comprising a processor configured to call a program from a memory, to enable a device equipped with the chip to perform the method according to any one of claims 1 to 42 or 43 to 84.

**173.**

A computer-readable storage medium, having stored thereon a program, wherein the program enables a computer to perform the method according to any one of claims 1 to 42 or 43 to 84.

**174.**

A computer program product, comprising a program, wherein the program enables a computer to perform the method according to any one of claims 1 to 42 or 43 to 84.

**175.**

A computer program, enabling a computer to perform the method according to any one of claims 1 to 42 or 43 to 84.

100

FIG. 1

FIG. 2

FIG. 3

Transmitting, by a first device, a first frame to a second
device based on interference information, the first frame
capable of being used for indicating interference
coordination operation information of one or more links
and/or one or more sub-channels/operating frequency bands ⟋ S410

FIG. 4

|  | A-Control |  |
|---|---|---|
| Bits | 30 |  |

| Control ID | Control Infomation | Reserved |
|---|---|---|
| 4 | 2 | 24 |

Bits

| Device Type | Reserved |
|---|---|
| 1 | 1 |

Bits

| MAC Header | Frame Body | FCS |
|---|---|---|

| Category | Action | Element ID | Length | Element ID Extension | Interference -Info |
|---|---|---|---|---|---|
| 1 | 1 | 1 | 1 | 1 | Variable |

Octets

| Duration Unit | Inter-Info 1 | ... | Inter-Info n | Padding |
|---|---|---|---|---|
| 2 | 45 |  | 45 | Variable |

Bits — Variable

| Link ID | Sub-channel ID | Is Interfered | Type | Start Time | Duration | Frequency | Periodicity |
|---|---|---|---|---|---|---|---|
| 4 | 3 | 1 | 2 | 16 | 3 | 4 |  |

Bits

Optional

| Period Unit | Period Duration | Period Interval | U/D Ratio |
|---|---|---|---|
| 2 | 3 | 4 | 3 |

Bits

FIG. 5

Period Interval
=u*Period
Unit

Duration=
n*Duration Unit

Period Duration= N*Period Unit

FIG. 6

| Frame Control | Duration | RA | TA | Conmmon Info | User Info List | Padding | FCS |
|---|---|---|---|---|---|---|---|
| 2 | 2 | 6 | 6 | 8 | | 4 | 4 |

←————————MAC Header————————→

| AID 12 | RU Alloctaion | UL FEC Coding Type | UL HE-MCS | UL DCM | SS Allocation/ RA-RU Information | UL Target Receive Power | REQ CDI-Info | Reserved | Trigger Dependent User Info |
|---|---|---|---|---|---|---|---|---|---|
| 12 | 8 | 1 | 4 | 1 | 6 | 7 | 1 | 1 | Variable |

FIG. 7

| Element ID | Length | Control | TWT Parameter Information |
|---|---|---|---|
| 1 | 1 | 1 | Variable |

Octets

| NDP Paging Indicator | Responder PM Mode | Negotiation Type | TWT Information Frame Disabled | Wake Duration Unit | Link ID Bitmap Present |
|---|---|---|---|---|---|
| 1 | 1 | 2 | 1 | 2 | 1 |

Bits

FIG. 8A

| Element ID | Length | Control | TWT Sub-channel Information | TWT Parameter Information |
|---|---|---|---|---|
| 1 | 1 | 1 | 3 | Variable |

Octets

| Link ID | Sub-channel ID | Sub-channel Frequency | Type | Unavailable Time | Is Master | Padding |
|---|---|---|---|---|---|---|
| 4 | 3 | 4 | 2 | 4 | 1 | 6 |

Bits

FIG. 8B

| Element ID | Length | Control | TWT Information | TWT Parameter Information |
|---|---|---|---|---|
| 1 | 1 | 1 | 1 | Variable |

Octets

| UL/DL Indication | U/D Ratio | RDG | Padding |
|---|---|---|---|
| 2 | 3 | 1 | 2 |

Bits

FIG. 8C

| Frame Control | Duration | RA | TA | User Info | FCS |
|---|---|---|---|---|---|

←————————————MAC Header————————————→

Octets: 2, 2, 6, 6, Variable, 4

| Duration Unit | Link Info 1 | ... | Link Info n | Padding |
|---|---|---|---|---|

Bits: 2, Variable

| Link ID | NSS | Link Frequency | Timer | Max MCS | Max NSS | Max PPDU Size |
|---|---|---|---|---|---|---|

Bits: 4, 4, 4, 7, 4, 4, Variable

**FIG. 9**

| Link ID | NSS | Link Frequency | Timer | Duration Unit | Max MCS | Max NSS | Max PPDU Size |
|---|---|---|---|---|---|---|---|

4, 4, 4, 7, 2, 4, 4

**FIG. 10**

| TWT Request | TWT Setup Command | Trigger | Last Broadcast Parameter Set | Flow Type | Broadcast TWT Recommendation | TWT Wake Interval Exponent | Implicit |
|---|---|---|---|---|---|---|---|

Bits: 1, 3, 1, 1, 1, 3, 5, 1

**FIG. 11**

**FIG. 12**

FIG. 13A

FIG. 13B

FIG. 13C

FIG. 13D

FIG. 14A

FIG. 14B

FIG. 15A

FIG. 15B

FIG. 15C

FIG. 16A

Trigger-CDI

AP

ACK

Non-AP
STA

CDI-
Info

←SIFS→   ←SIFS→

FIG. 16B

Trigger-CDI

AP

ACK

Non-AP
STA1

CDI-
Info

Non-AP
STA2

CDI-
Info

←SIFS→   ←SIFS→

FIG. 16C

Communication device 1700

Transmitting module 1710

FIG. 17

Communication device 1800

Receiving module 1810

FIG. 18

FIG. 19

# EP 4 694 554 A1

## INTERNATIONAL SEARCH REPORT

International application No.

**PCT/CN2024/083895**

### A. CLASSIFICATION OF SUBJECT MATTER

H04W76/15(2018.01)i

According to International Patent Classification (IPC) or to both national classification and IPC

### B. FIELDS SEARCHED

Minimum documentation searched (classification system followed by classification symbols)

IPC:H04W; H04L

Documentation searched other than minimum documentation to the extent that such documents are included in the fields searched

Electronic data base consulted during the international search (name of data base and, where practicable, search terms used)

CNABS: CNTXT; CNKI; VEN; ENTXT; ENTXTC; 3GPP: 帧, 链路, 信道, 频段, 干扰, 时间, 可用, 不可用, 周期, TWT, 唤醒时间, 链路标识, ID, 元素, 空间流, 数量, NSS, MCS, PPDU, MU-RTS, 上行, 下行, 时隙, frame, link, channel, frequency band, interference, time, available, unavailable, period, link ID, element, spatial stream, number

### C. DOCUMENTS CONSIDERED TO BE RELEVANT

| Category* | Citation of document, with indication, where appropriate, of the relevant passages | Relevant to claim No. |
|---|---|---|
| X | CN 115395996 A (MEDIATEK SINGAPORE PTE. LTD.) 25 November 2022 (2022-11-25) description, paragraphs 5-77 | 1-175 |
| X | CN 116600368 A (HUAWEI TECHNOLOGIES CO., LTD.) 15 August 2023 (2023-08-15) description, paragraphs 178-418 | 1-175 |
| X | CN 116669230 A (HUAWEI TECHNOLOGIES CO., LTD.) 29 August 2023 (2023-08-29) description, paragraphs 184-437 | 1-175 |
| A | CN 117356156 A (WILUS INSTITUTE OF STANDARDS AND TECHNOLOGY INC.) 05 January 2024 (2024-01-05) entire document | 1-175 |
| A | US 2014119288 A1 (SAMSUNG ELECTRONICS CO., LTD.) 01 May 2014 (2014-05-01) entire document | 1-175 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 December 2024** | **16 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/083895**

| Patent document cited in search report | | | Publication date (day/month/year) | Patent family member(s) | | | Publication date (day/month/year) |
|---|---|---|---|---|---|---|---|
| CN | 115395996 | A | 25 November 2022 | None | | | |
| CN | 116600368 | A | 15 August 2023 | None | | | |
| CN | 116669230 | A | 29 August 2023 | None | | | |
| CN | 117356156 | A | 05 January 2024 | US | 2024090034 | A1 | 14 March 2024 |
| | | | | EP | 4351255 | A1 | 10 April 2024 |
| | | | | EP | 4351255 | A4 | 14 August 2024 |
| | | | | JP | 2024520031 | A | 21 May 2024 |
| | | | | WO | 2022250453 | A1 | 01 December 2022 |
| | | | | KR | 20230171987 | A | 21 December 2023 |
| US | 2014119288 | A1 | 01 May 2014 | KR | 20140055944 | A | 09 May 2014 |
| | | | | KR | 102134457 | B1 | 16 July 2020 |
| | | | | US | 9232502 | B2 | 05 January 2016 |

Form PCT/ISA/210 (patent family annex) (July 2022)